(19) Europäisches Patentamt
European Patent Office
Office européen des brevets

(11) **EP 4 730 779 A1**

(12) **EUROPEAN PATENT APPLICATION**

(43) Date of publication:
**22.04.2026 Bulletin 2026/17**

(51) International Patent Classification (IPC):
*H04N 19/117* (2014.01)    *H04N 19/70* (2014.01)
*H04N 19/85* (2014.01)

(21) Application number: **24306721.2**

(52) Cooperative Patent Classification (CPC):
**H04N 19/117; H04N 19/70; H04N 19/85**

(22) Date of filing: **17.10.2024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **FRANCOIS, Edouard**
  **35890 BOURG DES COMPTES (FR)**
• **DOYEN, Didier**
  **35510 CESSON-SEVIGNE (FR)**
• **DEMARTY, Claire-Helene**
  **35520 MONTREUIL LE GAST (FR)**
• **DE LAGRANGE, Philippe**
  **35830 BETTON (FR)**

(74) Representative: **Interdigital
Immeuble ZEN 2
845 A, avenue des Champs Blancs
35510 Cesson-Sévigné (FR)**

(54) **METHOD AND APPARATUS FOR ENCODING/DECODING**

(57)    The present disclosure proposes a neural-network post-filter NNPF that, in addition to the decoded pictures, uses as input an indication of a task (i.e. control data) which enables generating a different output for the same input decoded pictures, the output picture being specified/guided for the task or control data. For instance, the NNPF may be named a generative NNPF, as the neural-network post-filter may generate a picture specified by a particular hypothesis or control input. For instance, encoding and decoding method and/or apparatus that comprises signaling one or more syntax structures for neural-network post-filter characteristics adapted to the present principles are disclosed.

FIG. 6

EP 4 730 779 A1

**Description**

**BACKGROUND**

The present application is related to a method and an apparatus for generating a filtered picture of a decoded picture guided by a control text prompt.

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction. Recent improvements to video compression technology includes a Neural-Network Post-Filter NNPF designed for various post-processing filtering purpose such as general visual quality improvement, chroma upsampling, resolution resampling, picture rate upsampling, temporal extrapolation.

**BRIEF SUMMARY**

In various implementations, methods and devices are disclosed that provide a syntax structure adapted to specify a NNPF that, in addition to the decoded pictures, uses as input an indication of a task (i.e. control data) which enables generating a different output for the same input decoded pictures, the output picture being specified/guided by the task or control data.

According to a first aspect, a method of video encoding is disclosed that comprises encoding a picture of a video; obtaining an indication on whether a control information guides a neural-network post-filter NNPF or not; obtaining information on a neural-network post-filter NNPF model generating at least one filtered picture by applying the NNPF model to the picture of the video and a text prompt information; encoding a syntax structure NNPFC for neural-network post-filter, the syntax structure NNPFC comprising an indication on whether a control information guides a neural-network post-filter NNPF or not; encoding a syntax structure for neural-network post-filter activation NNPFA associated with the NNPFC; and generating a bitstream comprising an encoded picture, an encoded NNPFC, and an encoded NNPFA.

According to a second aspect, a method of video decoding is disclosed that comprises decoding a picture of a video; obtaining a syntax structure NNPFC for neural-network post-filter, the syntax structure NNPFC comprising an indication of a control information guiding a neural-network post-filter NNPF; decoding a neural-network post-filter NNPF model from the obtained NNPFC; obtaining a syntax structure for neural-network post-filter activation NNPFA associated with the obtained NNPFC; obtaining a text prompt information responsive to the indication that control information guides the neural-network post-filter NNPF; and generating at least one filtered picture by applying the activated NNPF model to the decoded picture and the text prompt information.

One or more embodiments also provide method and/or apparatus for signaling the different variants of the one or more syntax structures for neural-network post-filter according to any of the embodiments described herein.

One or more embodiments also provide an apparatus for encoding/decoding video comprising one or more processors and at least one memory coupled to said one or more processors, wherein said one or more processors are configured to perform the encoding method according to any of the embodiments described herein.

One or more embodiments also provide a computer program comprising instructions which when executed by one or more processors cause the one or more processors to perform the encoding method according to any of the embodiments described herein. One or more of the present embodiments also provide a computer readable storage medium having stored thereon instructions for encoding or decoding a video according to the methods described herein.

One or more embodiments also provide a computer readable storage medium having stored thereon video data generated according to the methods described above. One or more embodiments also provide a method and apparatus for transmitting or receiving the video data generated according to the methods described herein.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;

FIG. 2 is a block diagram illustrating an example video encoder according to one or more embodiments of the present disclosure;

FIG. 3 is a block diagram illustrating an example video decoder according to one or more embodiments of the present disclosure;

FIG. 4 illustrates an example of usage of the NNPF process;

FIG. 5 illustrates another example of usage of the NNPF process for the use case of frame temporal extrapolation;

FIG. 6 and FIG. 7 provide a flow chart of a decoding and post-filtering process according to various embodiments of the present principles; and

FIG. 8 provides a flow chart of an encoding and signaling process according to an embodiment of the present principles.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

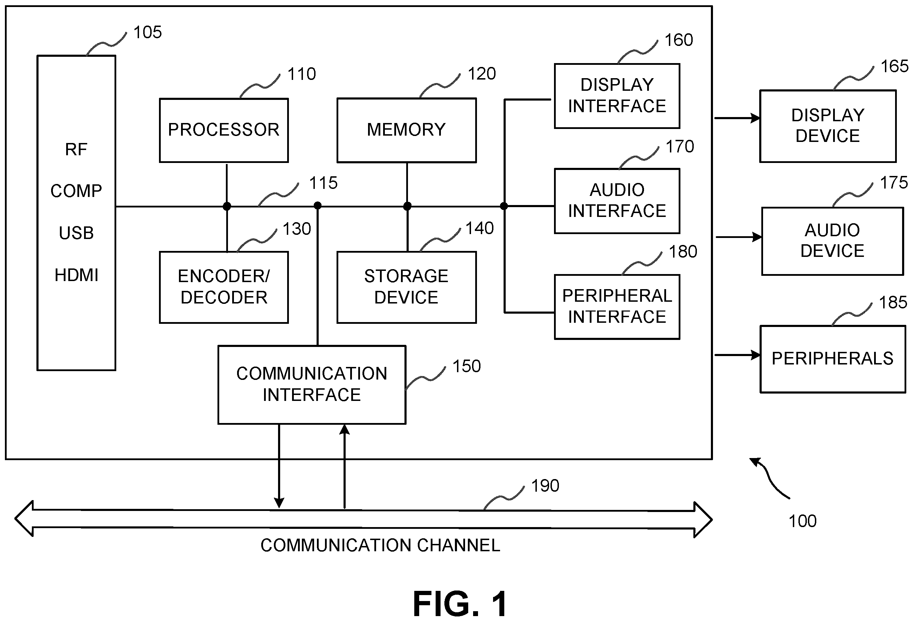

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

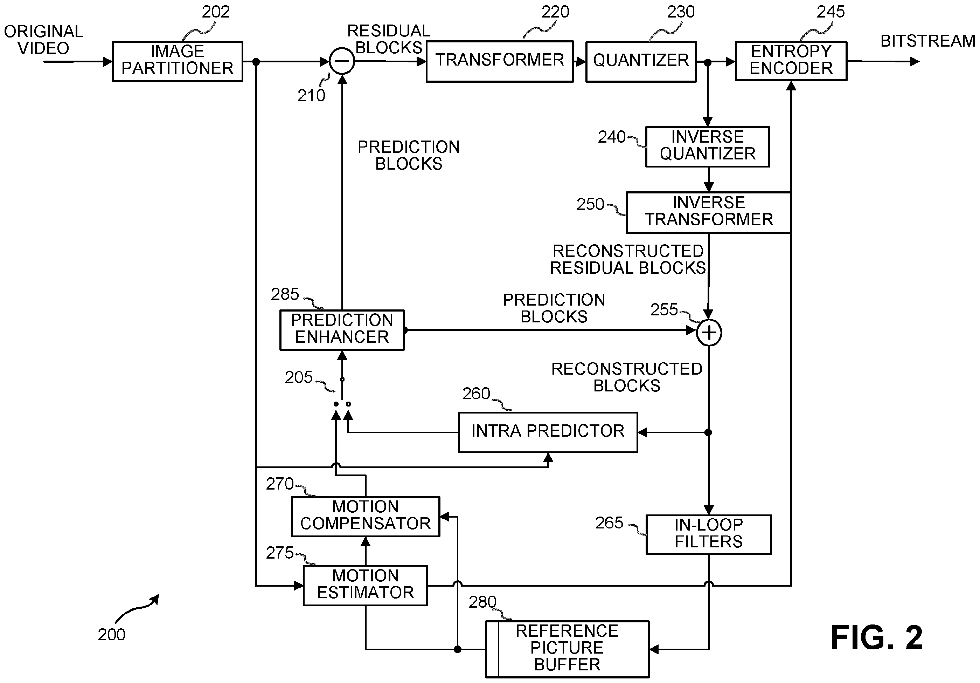

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

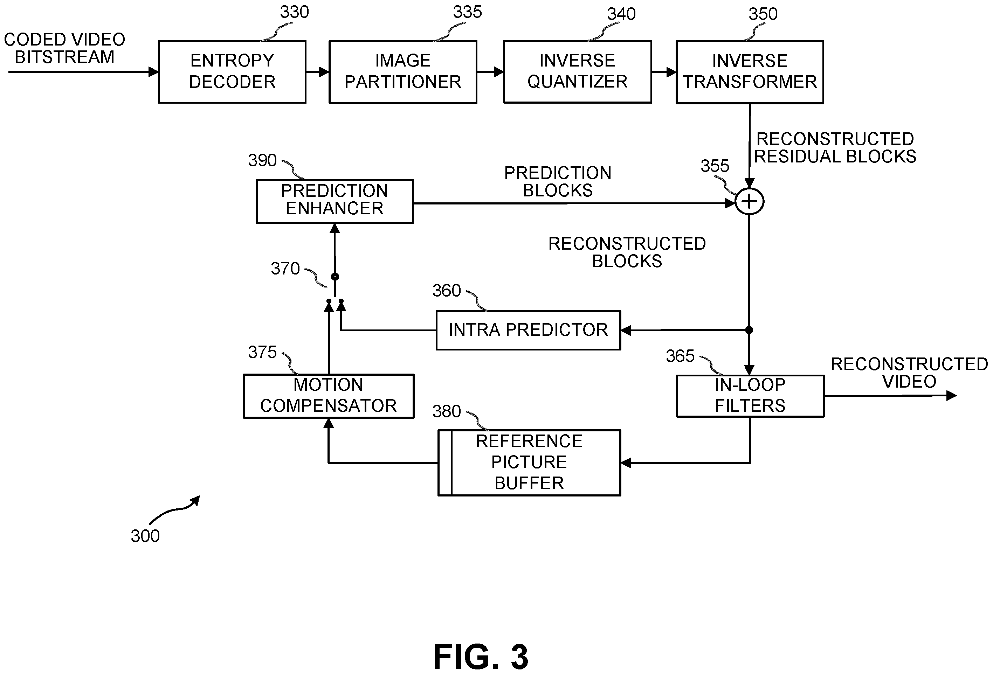

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by $C$).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream. As described hereafter, the post-decoding processing can also include post-processing filtering.

Recent additions to video compression technology include various industry standards, versions of reference software and/or documentation such as Enhanced Compression Model (ECM) being developed by the JVET (Joint Video Exploration Team) group. The aim is to make further improvements to the existing VVC (Versatile Video Coding) standard and VSEI specification.

Recent improvements to video compression technology includes a Neural-Network Post-Filter NNPF designed for various post-processing filtering purpose such as general visual quality improvement, chroma upsampling, resolution resampling, picture rate upsampling. Yet, a recent addition to post-processing filtering comprises temporal extrapolation Neural Network NN, which is also known as a video prediction NN and, which generates one or more pictures in the future given one or more past pictures as input. For instance, typical use cases for temporal extrapolation include very low delay computer vision for domains like robotics and autonomous driving, where extrapolated future pictures facilitate anticipatory decision making; or an increase of the rendered picture rate in very low-latency applications, such as cloud gaming, relative to the decoded picture rate. Various implementations of the Neural-Network Post-Filter NNPF are realized by the means of a parameterized Neural Network (NN) model. For instance, information related to the parameterized NN model is signalled in the bitstream.

**Feature(s) associated with NNPFC SEI are provided herein.**

The neural-network post-filter (NNPF) characteristics SEI message is defined in an amendment of the VSEI specification. It allows conveying information related to a Neural Network (NN) model (as external or internal parameters, depending on syntax element **nnpfc_mode_idc**), plus information related to the purpose of the NN model (the "**nnpfc_purpose**" syntax element). This information is used to indicate the purposes that the signalled NNPF is intended to.

In a first prior art approach, an example of NNPFC SEI syntax has been proposed as illustrated in the following table.

| nn_post_filter_characteristics( payloadSize ) { | **Descriptor** |
|---|---|
| **nnpfc_purpose** | u(16) |
| **nnpfc_id** | ue(v) |
| **nnpfc_base_flag** | u(1) |
| **nnpfc_mode_idc** | ue(v) |
| if( nnpfc_mode_idc = = 1 ) { | |
|   while( !byte_aligned( ) ) | |
|   **nnpfc_alignment_zero_bit_a** | u(1) |
|   **nnpfc_tag_uri** | st(v) |
|   **nnpfc_uri** | st(v) |
| } | |
| **nnpfc_property_present flag** | u(1) |
| if( nnpfc_property_present_flag ) { | |
|   /* input and output formatting */ | |
|   **nnpfc_num_input_pics_minus1** | ue(v) |
|   if( nnpfc_num_input_pics_minus1 > 0 ) { | |
|     for( i = 0; i <= nnpfc_num_input_pics_minus1; i++ ) | |
|     **nnpfc_input_pic_filtering_flag**[ i ] | u(1) |
|     **nnpfc_absent_input_pic_zero_flag** | u(1) |
|   } | |
|   if( ChromaUpsamplingFlag ) | |
|     **nnpfc_out_sub_c_flag** | u(1) |
|   if( ColourizationFlag ) | |
|     **nnpfc_out_colour_format_idc** | u(2) |
|   if( ResolutionResamplingFlag ) { | |
|     **nnpfc_pic_width_num_minus1** | ue(v) |
|     **nnpfc_pic_width_denom_minus1** | ue(v) |
|     **nnpfc_pic_height_num_minus1** | ue(v) |
|     **nnpfc_pic_height_denom_minus1** | ue(v) |
|   } | |
|   if( PictureRateUpsamplingFlag ) | |
|     for( i = 0; i < nnpfc_num_input_pics_minus1; i++ ) | |

(continued)

| | |
|---|---|
| **nnpfc_interpolated_pics**[ i ] | ue(v) |
| if( TemporalExtrapolationFlag ) | |
| **nnpfc_extrapolated_pics_minus1** | ue(v) |
| if( SpatialExtrapolationFlag ) { | |
| **nnpfc_spatial_extrapolation_left_offset** | se(v) |
| **nnpfc_spatial_extrapolation_right_offset** | se(v) |
| **nnpfc_spatial_extrapolation_top_offset** | se(v) |
| **nnpfc_spatial_extrapolation_bottom_offset** | se(v) |
| **nnpfc_spatial_extrapolation_prompt_present_flag** | u(1) |
| if (nnpfc_spatial_extrapolation_prompt_present_flag) { | |
| while( !byte_aligned( ) ) | |
| **nnpfc_alignment_zero_bit_c** | u(1) |
| **nnpfc_prompt** | st(v) |
| } | |
| } | |
| **nnpfc_component_last_flag** | u(1) |
| **nnpfc_inp_format_idc** | ue(v) |
| **nnpfc_auxiliary_inp_idc** | ue(v) |
| **nnpfc_inp_order_idc** | ue(v) |
| if( nnpfc_inp_format_idc = = 1 ) { | |
| if( nnpfc_inp_order_idc != 1 ) | |
| **nnpfc_inp_tensor_luma_bitdepth_minus8** | ue(v) |
| if( nnpfc_inp_order_idc > 0 ) | |
| **nnpfc_inp_tensor_chroma_bitdepth_minus8** | ue(v) |
| } | |
| **nnpfc_out_format_idc** | ue(v) |
| **nnpfc_out_order_idc** | ue(v) |
| if( nnpfc_out_format_idc = = 1 ) { | |
| if( nnpfc_out_order_idc != 1 ) | |
| **nnpfc_out_tensor_luma_bitdepth_minus8** | ue(v) |
| if( nnpfc_out_order_idc != 0 ) | |
| **nnpfc_out_tensor_chroma_bitdepth_minus8** | ue(v) |
| } | |
| **nnpfc_separate_colour_description_present_flag** | u(1) |
| if( nnpfc_separate_colour_description_present_flag ) { | |
| **nnpfc_colour_primaries** | u(8) |
| **nnpfc_transfer_characteristics** | u(8) |
| if( nnpfc_out_format_idc = = 1 ) { | |
| **nnpfc_matrix_coeffs** | u(8) |
| **nnpfc_full_range_flag** | u(1) |

(continued)

| | |
|---|---|
| } | |
| } | |
| if( nnpfc_out_order_idc > 0 ) | |
| **nnpfc_chroma_loc_info_present_flag** | u(1) |
| if( nnpfc_chroma_loc_info_present_flag ) | |
| **nnpfc_chroma_sample_loc_type_frame** | ue(v) |
| if( !SpatialExtrapolationFlag ) { | |
| **nnpfc_overlap** | ue(v) |
| **nnpfc_constant_patch_size_flag** | u(1) |
| if( nnpfc_constant_patch_size_flag ) { | |
| **nnpfc_patch_width_minus1** | ue(v) |
| **nnpfc_patch_height_minus1** | ue(v) |
| } else { | |
| **nnpfc_extended_patch_width_cd_delta_minus1** | ue(v) |
| **nnpfc_extended_patch_height_cd_delta_minus1** | ue(v) |
| } | |
| } | |
| **nnpfc_padding_type** | ue(v) |
| if( nnpfc_padding_type = = 4 ) { | |
| if( nnpfc_inp_order_idc != 1 ) | |
| **nnpfc_luma_padding_val** | ue(v) |
| if( nnpfc_inp_order_idc != 0 ) { | |
| **nnpfc_cb_padding_val** | ue(v) |
| **nnpfc_cr_padding_val** | ue(v) |
| } | |
| } | |
| **nnpfc_complexity_info_present_flag** | u(1) |
| if( nnpfc_complexity_info_present_flag ) { | |
| **nnpfc_parameter_type_idc** | u(2) |
| if( nnpfc_parameter_type_idc != 2 ) | |
| **nnpfc_log2_parameter_bit_length_minus3** | u(2) |
| **nnpfc_num_parameters_idc** | u(6) |
| **nnpfc_num_kmac_operations_idc** | ue(v) |
| **nnpfc_total_kilobyte_size** | ue(v) |
| } | |
| **nnpfc_num_metadata_extension_bits** | ue(v) |
| if( nnpfc_num_metadata_extension_bits > 0 ) { | |
| if( nnpfc_purpose = = 0 ) { | |
| **nnpfc_application_purpose_tag_uri_present_flag** | u(1) |
| while( !byte_aligned( ) ) | |

(continued)

| | |
|---|---|
| **nnpfc_metadata_alignment_zero_bit** | u(1) |
| if( nnpfc_application_purpose_tag_uri_present_flag ) | |
| **nnpfc_application_purpose_tag_uri** | st(v) |
| } | |
| if( SpatialExtrapolationFlag ) | |
| **nnpfc_scan_type_idc** | u(2) |
| **nnpfc_for_human_viewing_idc** | u(2) |
| **nnpfc_for_machine_analysis_idc** | u(2) |
| **nnpfc_reserved_metadata_extension** | u(v) |
| } | |
| } | |
| /* ISO/IEC 15938-17 bitstream */ | |
| if( nnpfc_mode_idc = = 0 ) { | |
| while( !byte_aligned( ) ) | |
| **nnpfc_alignment_zero_bit_b** | u(1) |
| for( i = 0; more_data_in_payload( ); i++ ) | |
| **nnpfc_payload_byte**[ i ] | b(8) |
| } | |
| } | |

The semantics related to **nnpfc_purpose** syntax may be specified as follows: **nnpfc_purpose** indicates the purpose of the NNPF as specified in Table 20, where ( nnpfc_purpose & bitMask ) not equal to 0 indicates that the NNPF has the purpose associated with the bitMask value in Table 20. When nnpfc_purpose is greater than 0 and ( nnpfc_purpose & bitMask ) is equal to 0, the purpose associated with the bitMask value is not applicable to the NNPF. When nnpfc_pupose is equal to 0, the NNPF may be used as determined by the application and as specified by the nnpfc_application_purpose_tag_uri.

All NNPFC SEI messages with a particular value of nnpfc_id within a CLVS shall have the same value of nnpfc_purpose.

The value of nnpfc_purpose shall be in the range of 0 to 255, inclusive, in bitstreams conforming to this version of this Specification. Values of 256 to 65 535, inclusive, for nnpfc_purpose are reserved for future use by ITU-T | ISO/IEC and shall not be present in bitstreams conforming to this version of this Specification. Decoders conforming to this version of this Specification shall ignore NNPFC SEI messages with nnpfc_purpose in the range of 256 to 65 535, inclusive.

**Table 20 - Definition of nnpfc_purpose**

| bitMask | Interpretation |
|---|---|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |
| 0x40 | Temporal extrapolation (i.e., generating one or more future pictures) |

(continued)

| bitMask | Interpretation |
|---------|----------------|
| 0x80 | Spatial extrapolation (i.e., generating content outside of the spatial area of the input pictures), possibly also with removal (i.e. remove partial content from the input pictures) |

The variables ChromaUpsamplingFlag, ResolutionResamplingFlag, PictureRateUpsamplingFlag, BitDepthUpsamplingFlag, ColourizationFlag, and TemporalExtrapolationFlag, specifying whether nnpfc_purpose indicates the purpose of the NNPF to include chroma upsampling, resolution resampling, picture rate upsampling, bit depth upsampling, colourization, and temporal extrapolation, respectively, are derived as follows:

$$\text{ChromaUpsamplingFlag} = (\,(\,\text{nnpfc\_purpose} \,\&\, 0x02\,)>0\,)\,?\,1:0$$

$$\text{ResolutionResamplingFlag} = (\,(\,\text{nnpfc\_purpose} \,\&\, 0x04\,)>0\,)\,?\,1:0$$

$$\text{PictureRateUpsamplingFlag} = (\,(\,\text{nnpfc\_purpose} \,\&\, 0x08\,)>0\,)\,?\,1:0 \qquad\qquad (75)$$

$$\text{BitDepthUpsamplingFlag} = (\,(\,\text{nnpfc\_purpose} \,\&\, 0x10\,)>0\,)\,?\,1:0$$

$$\text{ColourizationFlag} = (\,(\,\text{nnpfc\_purpose} \,\&\, 0x20\,)>0\,)\,?\,1:0$$

$$\text{TemporalExtrapolationFlag} = (\,(\,\text{nnpfc\_purpose} \,\&\, 0x40\,)>0\,)\,?\,1:0$$

$$\text{SpatialExtrapolationFlag} = (\,(\,\text{nnpfc\_purpose} \,\&\, 0x80\,)>0\,)\,?\,1:0$$

NOTE 2- When a reserved value of nnpfc_purpose is taken into use in the future by ITU-T | ISO/IEC, the syntax of this SEI message could be extended with syntax elements whose presence is conditioned by nnpfc_purpose being equal to that value or any one of a set of values including that value.

In the NNPF characteristics SEI of the first prior art approach, the concept of sending a base NNPF in an NNPFC SEI and of updating it in another NNPFC SEI is specified. An NNPF with a given Id specified in nnpfc_id, can be signalled as a base model, that can be used as reference and that can also be updated by sending/receiving a new NNPFC SEI with same nnpfc_id. The syntax element nnpfc_base_flag is defined for indicating whether the NN model is a base model or an update relative to the base NNPF. Basic constraints are specified on the update mechanism:

- The first NNPF, signalled in an NNPFC SEI, with a given Id appearing in the bitstream should be a base NNPF;
- All subsequent NNPFC SEIs having the same Id and being base NNPFC should have the same content as the first base NNPFC with this Id;
- Updates are not cumulative but rather each update is applied on the base NNPF.

The semantics related to nnpfc_base_flag are provided below:

| nn_post_filter_characteristics( payloadSize ) { | Descriptor |
|------------------------------------------------|------------|
| nnpfc_purpose | u(16) |
| nnpfc_id | ue(v) |
| nnpfc_base_flag | u(1) |
| ... | |
| **nnpfc_base_flag** equal to 1 specifies that the SEI message specifies the base NNPF. nnpfc_base_flag equal to 0 specifies that the SEI message specifies an update relative to the base NNPF. | |

The following constraints apply to the value of nnpfc_base_flag:

- When an NNPFC SEI message is the first NNPFC SEI message, in decoding order, that has a particular nnpfc_id value within the current CLVS, the value of nnpfc_base_flag shall be equal to 1.
- All NNPFC SEI messages in a CLVS that have a particular nnpfc_id value and nnpfc_base_flag equal to 1 shall have identical SEI payload content.

When nnpfc_base_flag is equal to 0, the following applies:

- This SEI message defines an update relative to the preceding base NNPF in decoding order with the same nnpfc_id value. Updates are not cumulative but rather each update is applied on the base NNPF, which is the NNPF specified by the first NNPFC SEI message, in decoding order, that has a particular nnpfc_id value within the current CLVS. The NNPF defined by this SEI message is obtained by applying the update defined by this SEI message relative to the base NNPF with the same nnpfc_id value.
- This SEI message pertains to the current decoded picture and all subsequent decoded pictures of the current layer, in output order, until the end of the current CLVS or up to but excluding the decoded picture that follows the current decoded picture in output order within the current CLVS and is associated with a subsequent NNPFC SEI message, in decoding order, having nnpfc_base_flag equal to 0 and that particular nnpfc_id value within the current CLVS, whichever is earlier.

In addition to the NNPFC SEI message, a Neural-network post-filter activation SEI message (NNPFA) is further specified in the first prior art approach. NNPFA SEI is used to activate or de-activate the possible use of a neural-network post-processing filter (NNPF), identified by syntax elements **nnpfa_target_id** and **nnpfa_target_base_flag,** for post-processing filtering of a set of pictures.

If nnpfa_target_base_flag is equal to 1, the target NNPF is the base NNPF with nnpfc_id equal to nnpfa_target_id. Otherwise, the target NNPF is the NNPF specified by the last NNPFC SEI message with nnpfc_id equal to nnpfa_target_id, that is a base NNPF.

It is noted that there can be several NNPFA SEI messages present for the same picture, for example, when the NNPFs are meant for different purposes or for filtering of different colour components.

Syntax and excerpts of semantics of NNPFA are provided below.

| nn_post_filter_activation( payloadSize ) { | **Descriptor** |
|---|---|
| nnpfa_target_id | ue(v) |
| nnpfa_cancel_flag | u(1) |
| if( !nnpfa_cancel_flag ) { | |
| nnpfa_persistence_flag | u(1) |
| nnpfa_target_base_flag | u(1) |
| nnpfa_no_prev_clvs_flag | u(1) |
| if( nnpfa_persistence_flag ) | |
| nnpfa_no_foll_clvs_flag | u(1) |
| nnpfa_num_output_entries | ue(v) |
| for( i = 0; i < nnpfa_num_output_entries; i++ ) | |
| nnpfa_output_flag[ i ] | u(1) |
| } | |
| } | |

**nnpfa_target_base_flag** equal to 1 specifies that the target NNPF is the base NNPF with nnpfc_id equal to nnpfa_target_id. nnpfa_target_base_flag equal to 0 specifies that the target NNPF is the NNPF specified by the last NNPFC SEI message with nnpfc_id equal to nnpfa_target_id that precedes the first VCL NAL unit of the current picture in decoding order and is not a repetition of the NNPFC SEI message that contains the base NNPF.

NOTE 3 - An NNPFA message can activate a base NNPF with a particular nnpfc_id value when an update of the base NNPF is active, which switches the target NNPF from the updated NNPF to the base NNPF.

When nnpfa_target_base_flag in an NNPFA SEI message is equal to 0, there shall be at least one NNPFC SEI message with nnpfc_id equal to nnpfa_target_id and nnpfc_base_flag equal to 0 that precedes the NNPFA SEI message in decoding order.

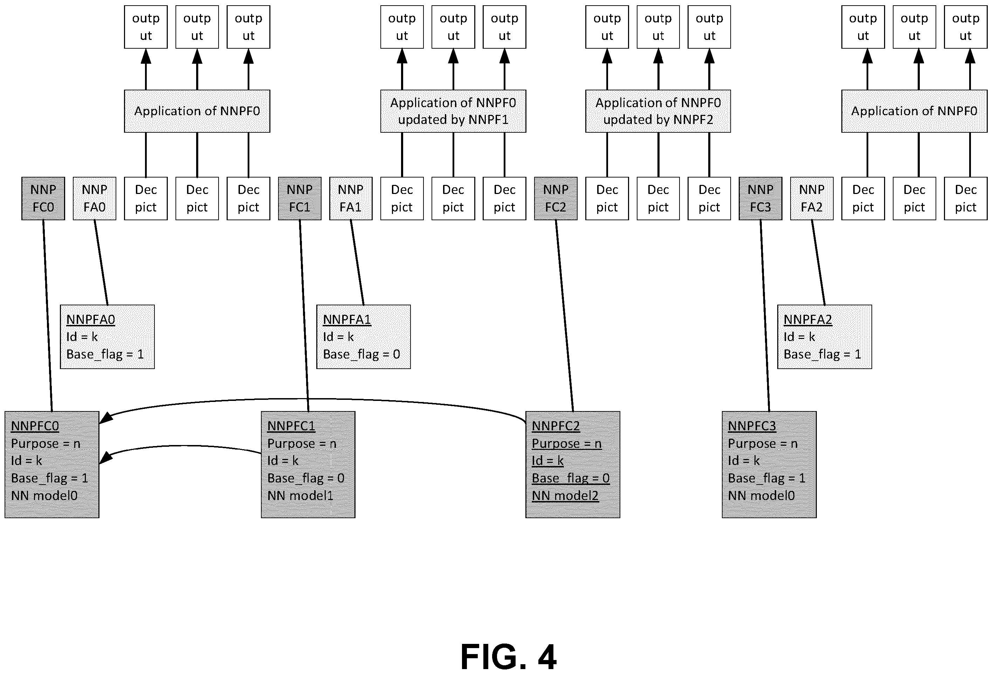

FIG. 4 illustrates an example of usage of the NNPF process. This example shows insertion in the stream of NNPFC SEIs where some are base, some are updates. It also shows insertion of NNPFA SEIs, for activating the NNPF. The NNPF version applies to decoded pictures depending on the location in the stream of the inserted NNPFC SEIs and NNPFA SEIs. The first received NNPFA (NNPFA0) activates the base NNPF (NNPFO corresponding to NNPFC0) for the subsequent decoded pictures. Then an update of the base NNPF (corresponding to NNPFC1) is received, and this update is activated by the second received NNPFA SEI (NNPFA1) for the subsequent decoded pictures. Another update of the base NNPF (corresponding to NNPFC2) is received, the update applying for the subsequent decoded pictures. Another base NNPFC is received (corresponding to NNPFC3), activated by a new NNPFA (NNPFA2) that re-activates the base NNPF (NNPFO) for the subsequent decoded pictures. In this example the output of the NNPF process are post-filtered versions of the decoded pictures.

In this figure and following figures, for notation simplification, nnpfc_purpose is replaced by "Purpose", nnpfc_id is replaced by "Id", nnpfc_base_flag is replaced by "Base_flag".

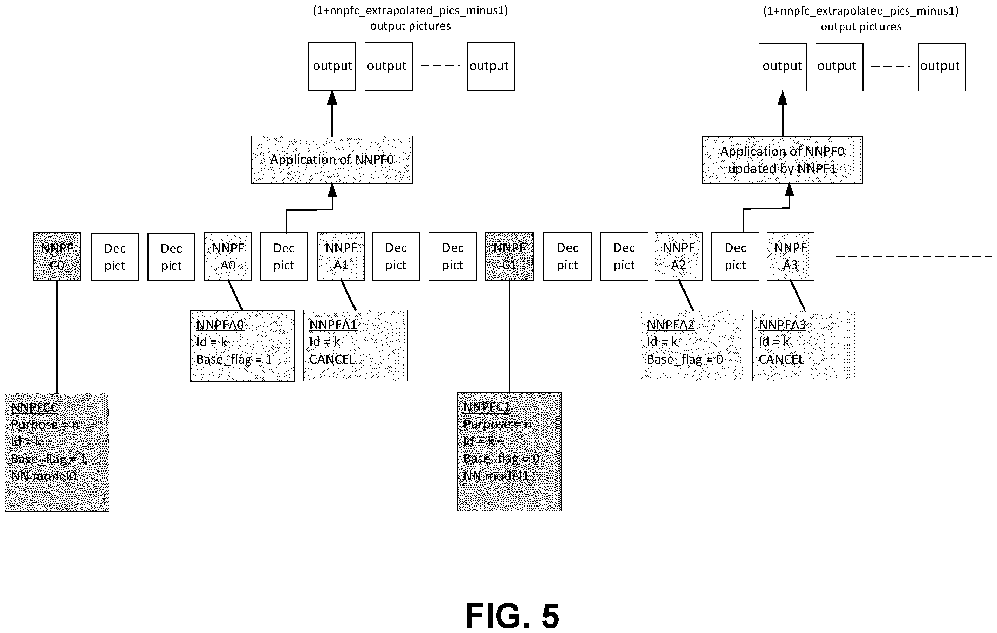

FIG. 5 illustrates another example of usage of the NNPF process for the use case of frame temporal extrapolation. In this case the output from NNPFs is made of several successive output pictures following in time the last decoded picture. Use cases for this Video prediction feature are robotics, autonomous driving, action anticipation. For instance, for self-driving cars, the trajectory prediction in traffic of pedestrians is extremely useful to anticipate future events. Base NNPFC0 is first received, and activated thanks to NNPFA0, which activates the application of NNPFO to generate (1+ nnpfc_extrapolated_pics_minus1) temporally extrapolated output pictures following the latest decoded picture. Input of the NNPFO is the last decoded picture, but may also include more than one previously decoded pictures. The application of NNPFO is then cancelled for the following decoded pictures, by NNPFA1 (CANCEL flag equal to 1). An update of the base NNPFO, NNPF1, is then received in NNPFC1, and activated by NNPFA2 to generate temporally extrapolated output pictures following the latest decoded picture. The application of NNPF1 is then cancelled for the following decoded pictures, by NNPFA2 (CANCEL flag equal to 1).

In the current design on the NNPF SEI messages, the application of the NNPF uses as input one (or more) decoded picture(s), and possibly auxiliary input data, depending on the value of the syntax element **nnpfc_auxiliary_inp_idc.** When nnpfc_auxiliary_inp_idc is equal to 1, the auxiliary input data consists of a filtering strength control value array, typically related to the quantization step applied for the inverse quantization of the residual samples of the decoded picture.

The semantics **of nnpfc_auxiliary_inp_idc** may be as follows:
**nnpfc_auxiliary_inp_idc** greater than 0 indicates that auxiliary input data is present in the input tensor of the NNPF. nnpfc_auxiliary_inp_idc equal to 0 indicates that auxiliary input data is not present in the input tensor. nnpfc_auxiliary_inp_idc equal to 1 specifies that auxiliary input data is derived as specified in Formula 95.

The value of nnpfc_auxiliary_inp_idc shall be in the range of 0 to 255, inclusive. Values of 2 to 255, inclusive, for nnpfc_auxiliary_inp_idc are reserved for future use by ITU-T | ISO/IEC and shall not be present in bitstreams conforming to this edition of this document. Decoders conforming to this edition of this document shall ignore NNPFC SEI messages with nnpfc_auxiliary_inp_idc in the range of 2 to 255, inclusive.

In the current design of NNPF SEI messages dedicated temporal extrapolation, it is not possible to generate different versions of a temporally extrapolated picture from a same NNPF, that uses as input the same decoded picture(s). In other words, invoking several inferences of a same NNPF at a given time instance using as input a same decoded picture(s) results in the same temporally extrapolated output picture.

In another prior art approach, it has been proposed to optionally add, in the NNPFC syntax, a text prompt indicative of a task of spatial extrapolation image generation. The text prompt is proposed to be passed as auxiliary information to the NNPF (nnpfc_auxiliary_inp_idc). For instance, the text prompt may be used to indicate which type of spatial extrapolation is performed by the NNPF, such as "road" when the extrapolation NNPF adds a road to the input picture, or "water" when the extrapolation NNPF adds water to the input picture. This information is attached to the SEI message, and to the NN model, and is therefore indicative of the output that is expected from the spatial extrapolation NNPF. One main issue with this approach is that the neural network NNPF model associated with the signaled text prompt is specialized for the task(s) described by the signaled text prompt. The neural network NNPF model is not generic enough to perform other tasks than the one described by the signaled text prompt. For instance, the NNPF may be trained to perform spatial extrapolation by adding a road to the input picture when "road" is specified, or by adding water to the input picture when "road" is specified. However, if the text prompt specifies "boat", there is no guarantee that the NNPF will be able to handle or interpret the information. Indeed, as the NNPF is supposed to be specialized for the purpose indicated in the auxiliary information, entering another text may lead to something wrong.

Accordingly, the present disclosure proposes to an NNPF that, in addition to the decoded pictures, uses as input an indication of a task (i.e. control data) which enables generating a different output for the same input decoded pictures, the output picture being specified by the task or control data. For instance, the NNPF may be named a generative NNPF, as the neural-network post-filter may generate a picture specified by a particular hypothesis or control input. Back to the previous example, such generative NNPF would advantageously be able to perform spatial extrapolation by adding a boat to the input picture when "boat" is specified as control data. According to a particular variant, it is further proposed to signal, in the syntax of the NNPFC SEI, that the NNPF may be controlled by input information, either coming from external means (for instance by the application client, or decoder, or end-user rendering device, or end-user gaming device ...) or signaled in bitstream. The information may be in the shape of a text prompt, however this variant is not restrictive. Other information types may be envisioned by the skilled in the art, for example any numerical value(s), a binary flag, etc. For instance, by using the present principles, a temporal extrapolation NNPF may generate different output temporally extrapolated pictures from same input decoded picture(s) by using as additional input information different values.

In the following, the present principles are illustrated using the NNPFC purpose for temporal extrapolation. The multiple output instances are multiple different temporal extrapolated pictures at each time instant. The concept may be extended to other purposes such as spatial interpolation, frame interpolation, frame upsampling, frame filtering, colourization, quality improvement according to non-limiting examples.

According to the first embodiment, it is proposed to signal a control flag indicative of the use of a text prompt information as input of the NNPF.

According to a second embodiment, it is proposed to signal/provide an indication of whether the text prompt is signaled or not.

According to a third embodiment, several possible input text prompts are signaled by the encoder to the decoder.

According to a fourth embodiment, instead of a control flag, a number of input text prompts are signaled by the encoder to the decoder.

According to the fifth, sixth and seventh embodiments, an adaptation of the input tensor using the text prompt information as proposed in previous embodiments (and the impact on the VSEI specification text) is also described.

According to an eighth embodiment, a process at decoder implementing the first and second embodiments is disclosed.

According to a nineth embodiment, a process at encoder implementing the first and second embodiments is disclosed.

**Feature(s) associated with the first embodiment are provided herein.**

The first embodiment comprises signaling of a control flag indicative of a control information guiding, such as a text prompt information, used as input of the NNPF for guiding NNPF while generating a filtered picture. According to a first variant embodiment, such control flag may be signaled for a particular purpose. For instance, one may consider a variant where the purpose indicated in the NNPFC SEI is temporal extrapolation. According to the first variant embodiment, a flag is signaled in the NNPFC SEI, nnpfc_temporal_extrapolation_prompt_control_flag, that indicates whether the NNPF may use as input an information, in the shape of a text prompt (a string of characters), that corresponds to one or more instructions to the NNPF. When nnpfc_temporal_extrapolation_prompt_control_flag is true (equal to 1), external means may provide a text prompt controlling the NNPF.

The table below shows the proposed syntax change, highlighted in underlined, italic.

| nn_post_filter_characteristics( payloadSize ) { | Descriptor |
|---|---|
| **nnpfc_purpose** | u(16) |
| **nnpfc_id** | ue(v) |
| ... | u(1) |
| **nnpfc_property_present_flag** | u(1) |
| if( nnpfc_property_present_flag ) { | |
| ... | |
| if( PictureRateUpsamplingFlag ) | |
| for( i = 0; i < nnpfc_num_input_pics_minus1; i++ ) | |
| **nnpfc_interpolated_pics**[ i ] | ue(v) |
| if( TemporalExtrapolationFlag ) *{* | |
| **nnpfc_extrapolated_pics_minus1** | ue(v) |
| *nnpfc_temporal_extrapolation_prompt_control_flag* | *u(1)* |
| } | |
| ... | |
| } | |
| /* ISO/IEC 15938-17 bitstream */ | |
| if( nnpfc_mode_idc = = 0 ) { | |

(continued)

| while( !byte_aligned( ) ) | |
|---|---|
| **nnpfc_alignment_zero_bit_b** | u(1) |
| for( i = 0; more_data_in_payload( ); i++ ) | |
| **nnpfc_payload_byte**[ i ] | b(8) |
| } | |
| } | |

An example of semantics of nnpfc_temporal_extrapolation_prompt_control_flag is provided in the text below.

**nnpfc_temporal_extrapolation_prompt_control_flag** equal to 1 specifies that a text string prompt shall be used as auxiliary input of the NNPF for generating the temporal extrapolation. When nnpfc_temporal_extrapolation_prompt_control_flag is equal to 1, the text string prompt shall not be a null string. nnpfc_temporal_extrapolation_prompt_control_flag equal to 0 specifies that no text string prompt is used as auxiliary input of the NNPF for generating the temporal extrapolation.

Note: When nnpfc_temporal_extrapolation_prompt_control_flag is equal to 1, the text string prompt is provided by external means to the NNPF, not specified in this document, for example by the end-user, or the end-user machine.

According to another variant, when nnpfc_temporal_extrapolation_prompt_control_flag is true, it is possible to give as input of the NNPF an input text prompt. Therefore, the temporal extrapolation NNPF may generate different temporally extrapolated output pictures from same input decoded picture(s) by using as additional control input information different input text prompts. Some examples in which this embodiment may be implemented are provided below.

One example of an application implementing the first embodiment is interactive immersive viewing using as display a head-mounted display. Temporal extrapolation may be used to anticipate the motion of the head of the end-user, in order to reduce the rendering latency, for example in case of delay due to the transmission network. In this example, possible text prompts may be "head does not move", "head turns to the right", "head turns to the left", "head turns to the top", "head turns to the bottom". In this case, depending on the text prompt, for instance, produced by the user's head motion and used as input to the NNPF, the generated output pictures may adapt to the direction indicated in the text prompt. The end-user device may detect the motion of the head, translate it as a text prompt, and give this information as input of the NNPF.

Another example of an application is automotive wherein it is desirable to anticipate the motion ahead of the car. The automotive device may detect the motion of a car or of pedestrians ahead, translate it as a text prompt, and give this information as input of the NNPF.

Another application example is cloud gaming application, wherein it is desirable to anticipate the next step of the game, depending on the expected action(s) of the gamer(s). The end-user gaming device may detect the actual action of the gamer, translate it as a text prompt, and give this information as input of the NNPF.

In all the above examples and more generally, the text prompt may be generated outside of the decoding system by some external means and may guide the NNPF to generate output pictures corresponding to the information carried by the text prompt.

According to a second variant embodiment, the control flag may be extended to multiple purposes, for instance, Spatial extrapolation, Temporal extrapolation, General visual quality improvement, Colourization. For example, in the case of Colourization, the text prompt may indicate some indication of style (e.g., in the context of style transfer) in the colourization process, for example, "colourization with the style of Van Gogh paintings", "colourization with the cartoon style", "colourization with old movie style".

The table below shows the proposed syntax change (highlighted in italic underlined). A control flag **nnpfc_prompt_control_flag** is signaled when the purpose is among Spatial extrapolation, Temporal extrapolation, General visual quality improvement, Colourization. This list is not exhaustive and may be extended to additional purposes for which a text prompt as auxiliary data might be used by the external means to guide the use of the output of the NNPF.

| nn_post_filter_characteristics( payloadSize ) { | **Descriptor** |
|---|---|
| **nnpfc_purpose** | u(16) |
| **nnpfc_id** | ue(v) |
| ... | u(1) |
| **nnpfc_property_present flag** | u(1) |

(continued)

| | |
|---|---|
| if( nnpfc_property_present_flag ) { | |
| ... | |
| if( PictureRateUpsamplingFlag ) | |
| for( i = 0; i < nnpfc_num_input_pics_minus1; i++ ) | |
| **nnpfc_interpolated_pics**[ i ] | ue(v) |
| if( TemporalExtrapolationFlag ) | |
| **nnpfc_extrapolated_pics_minus1** | ue(v) |
| *if( QualityImprovementFlag ‖ ColourizationFlag ‖ SpatialExtrapolationFlag ‖ TemporalExtrapolationFlag ) {* | |
| ***nnpfc_prompt_control_flag*** | *u(1)* |
| *}* | |
| ... | |
| } | |
| /* ISO/IEC 15938-17 bitstream */ | |
| if( nnpfc_mode_idc = = 0 ) { | |
| while( !byte_aligned( ) ) | |
| **nnpfc_alignment_zero_bit_b** | u(1) |
| for( i = 0; more_data_in_payload( ); i++ ) | |
| **nnpfc_payload_byte**[ i ] | b(8) |
| } | |
| } | |

**Feature(s) associated with the second embodiment are provided herein.**

The second embodiment comprises signaling an indication of whether the text prompt is signaled (e.g from the encoder) or comes from external means (in communication with the decoder). The second embodiment may be combined with any variant of first embodiment. According to the second embodiment, when nnpfc_prompt_control_flag is true, an additional flag is signaled to indicate whether the text prompt is signaled in the SEI message or not, and for instance may come from external means. A modified syntax is described below (changes highlighted in italic, underlined):

| nn_post_filter_characteristics( payloadSize ) { | **Descriptor** |
|---|---|
| **nnpfc_purpose** | u(16) |
| **nnpfc_id** | ue(v) |
| ... | u(1) |
| **nnpfc_property_present flag** | u(1) |
| if( nnpfc_property_present_flag ) { | |
| ... | |
| if( PictureRateUpsamplingFlag ) | |
| for( i = 0; i < nnpfc_num_input_pics_minus1; i++ ) | |
| **nnpfc_interpolated_pics**[ i ] | ue(v) |
| if( TemporalExtrapolationFlag ) | |
| **nnpfc_extrapolated_pics_minus1** | ue(v) |
| *if( QualityImprovementFlag ‖ ColourizationFlag ‖ SpatialExtrapolationFlag ‖ TemporalExtrapolationFlag ) {* | |

(continued)

| | |
|---|---|
| ***nnpfc_prompt_control_flag*** | ***u(1)*** |
| *if (nnpfc_prompt_control_flag) {* | |
| ***nnpfc_prompt_present_flag*** | ***u(1)*** |
| *if (nnpfc_prompt_present_flag ) {* | |
| *while( !byte_aligned( ) )* | |
| ***nnpfc_alignment_zero_bit_c*** | ***u(1)*** |
| ***nnpfc_text_prompt*** | ***st(v)*** |
| *}* | |
| *}* | |
| ... | |
| } | |
| /* ISO/IEC 15938-17 bitstream */ | |
| if( nnpfc_mode_idc = = 0 ) { | |
| while( !byte_aligned( ) ) | |
| **nnpfc_alignment_zero_bit_b** | u(1) |
| for( i = 0; more_data_in_payload( ); i++ ) | |
| **nnpfc_payload_byte**[ i ] | b(8) |
| } | |
| } | |

For instance, semantics for **nnpfc prompt_present_flag** may be:

**nnpfc_prompt_present flag** equal to 1 specifies that nnpfc_prompt is present and nnpfc_alignment_zero_bit_c syntax element may be present in the SEI message.
nnpfc_prompt_present flag equal to 0 specifies that nnpfc_prompt and nnpfc_alignment_zero_bit_c syntax elements are not present and that nnpfc_prompt is obtained from external means, not specified in this document.
Note: when nnpfc_prompt_control_flag is equal to 1 and nnpfc_prompt_present_flag is equal to 0, the text string prompt is provided by external means to the NNPF, not specified in this document, for example by the end-user, or the end-user machine.

**Feature(s) associated with the third embodiment are provided herein.**
The third embodiment comprises signaling of several possible input text prompts by the encoder. According to the third embodiment, the text prompt selected by external means may be selected among a set of possible text prompts signaled in the SEI message. An example of syntax is provided in the table below, with the syntax related to this variant embodiment indicated in underlined italic.

| nn_post_filter_characteristics( payloadSize ) { | **Descripto r** |
|---|---|
| **nnpfc_purpose** | u(16) |
| **nnpfc_id** | ue(v) |
| ... | u(1) |
| **nnpfc_property_present_flag** | u(1) |
| if( nnpfc_property_present_flag ) { | |
| ... | |
| if( PictureRateUpsamplingFlag) | |

(continued)

| | |
|---|---|
| for( i = 0; i < nnpfc_num_input_pics_minus1; i++ ) | |
| **nnpfc_interpolated_pics**[ i ] | ue(v) |
| if( TemporalExtrapolationFlag ) | |
| **nnpfc_extrapolated_pics_minus1** | ue(v) |
| *if( QualityImprovementFlag ‖ ColourizationFlag ‖ SpatialExtrapolationFlag ‖ TemporalExtrapolationFlag ) {* | |
| ***nnpfc_prompt_control_flag*** | *u(1)* |
| *if (nnpfc_prompt_control_flag) {* | |
| ***nnpfc_num_prompts*** | *u(1)* |
| *if (nnpfc_num_prompts > 0 ) {* | |
| *for( i = 0; i < nnpfc_num_prompts; i++ ) {* | |
| *for( !byte_aligned( ) )* | |
| *while( !byte aligned( ) )* | |
| ***nnpfc_alignment_zero_bit_c*** | *u(1)* |
| ***nnpfc_text_prompt[ i ]*** | *st(v)* |
| *}* | |
| *}* | |
| *}* | |
| ... | |
| } | |
| /* ISO/IEC 15938-17 bitstream */ | |
| if( nnpfc_mode_idc = = 0 ) { | |
| while( !byte_aligned( ) ) | |
| **nnpfc_alignment_zero_bit_b** | u(1) |
| for( i = 0; more_data_in_payload( ); i++ ) | |
| **nnpfc_payload_byte**[ i ] | b(8) |
| } | |
| } | |

The semantics may be as follows.

**nnpfc_num_prompts** specifies the number of signaled text prompts. When nnpfc_num_prompts is equal to 0, no text prompt is signaled. When nnpfc_num_prompts is greater than 0, syntax elements nnpfc_text_prompt[ i ] are signaled.

Note: when nnpfc_num_prompts is equal to 0, the text prompt to be used in the input tensor must be selected by external means not specified in this document.

Note: when nnpfc_num_prompts is greater than 1, the text prompt (the index of the text prompt) to be used in the input tensor must be selected by external means not specified in this document.

**nnpfc_text_prompt**[ i ] specifies the ith signaled text prompt, with i in 0.. nnpfc_num_prompts - 1.

In a variant, instead of signaling nnpfc_num_prompts, nnpfc_num_prompts_minus 1 is signaled, with the following semantics.

**nnpfc_num_prompts_minus1** specifies the number of signaled text prompts plus 1, nnpfc_text_prompt[ i ].

Note: when nnpfc_num_prompts is greater than 0, the text prompt (the index of the text prompt) to be used in the input tensor must be selected by external means not specified in this document.

**Feature(s) associated with the fourth embodiment are provided herein.**

The fourth embodiment corresponds to a simpler variant of the third embodiment, where nnpfc_prompt_control_flag is not signaled. Indeed, this flag may be considered as redundant with the syntax element nnpfc_num_prompts. When this parameter is equal to 0, it means that no text prompt is used by the NNPF. When it is larger than 0, it means that a text prompt is used by the NNPF. When this parameter is equal to 1, the single signaled text prompt is used as input of the NNPF. When it is larger than 1, external means are used to select among the set of signaled text prompts the one to be used as input of the NNPF.

The table below provided an example of simplified syntax.

| nn_post_filter_characteristics( payloadSize ) { | Descriptor |
|---|---|
| **nnpfc_purpose** | u(16) |
| **nnpfc_id** | ue(v) |
| ... | u(1) |
| **nnpfc_property_present_flag** | u(1) |
| if( nnpfc_property_present_flag ) { | |
| ... | |
| if( PictureRateUpsamplingFlag) | |
| for( i = 0; i < nnpfc_num_input_pics_minus1; i++ ) | |
| **nnpfc_interpolated_pics**[ i ] | ue(v) |
| if( TemporalExtrapolationFlag ) | |
| **nnpfc_extrapolated_pics_minus1** | ue(v) |
| *if( QualityImprovementFlag ‖ ColourizationFlag ‖ SpatialExtrapolationFlag ‖ TemporalExtrapolationFlag ) {* | |
| ***nnpfc_num_prompts*** | *u(1)* |
| *if (nnpfc_num_prompts > 0 ) {* | |
| *for( i = 0; i < nnpfc_num_prompts; i++ ) {* | |
| *for( !byte_aligned( ) )* | |
| *while( !byte_aligned( ) )* | |
| ***nnpfc_alignment_zero_bit_c*** | *u(1)* |
| ***nnpfc_text_prompt[ i ]*** | *st(v)* |
| *}* | |
| *}* | |
| ... | |
| } | |
| /* ISO/IEC 15938-17 bitstream */ | |
| if( nnpfc_mode_idc = = 0 ) { | |
| while( !byte_aligned( ) ) | |
| **nnpfc_alignment_zero_bit_b** | u(1) |
| for( i = 0; more_data_in_payload( ); i++ ) | |
| **nnpfc_payload_byte**[ i ] | b(8) |
| } | |
| } | |

The semantics may be as follows.

**nnpfc_num_prompts** specifies the number of signaled text prompts. When nnpfc_num_prompts is equal to 0, no text prompt is signaled and no text prompt is used in the input tensor. When nnpfc_num_prompts is greater than 0, syntax elements nnpfc_text_prompt[ i ] are signaled.

Note: when nnpfc_num_prompts is greater than 1, the text prompt (the index of the text prompt) to be used in the input tensor must be selected by external means not specified in this document.

**nnpfc_text_prompt**[ i ] specifies the ith signaled text prompt, with i in 0.. nnpfc_num_prompts - 1.

**Feature(s) associated with the fifth embodiment are provided herein.**

The fifth embodiment comprises deriving/adapting the input tensors of the NNPF depending on the control flag.

In a variant of the second embodiment, the text prompt signaled in the SEI message or provided by external means is used, possibly after conversion to an integer value (or to another format adapted to the NNPF, such as floating point, a vector of floats), as value of each element of an additional 2D input tensor of the NNPF, possibly with dimensions corresponding to the basic patch used by the NNPF, as defined by parameters inpPatchWidth, inpPatchHeight and nnpfc_overlap, as defined in the NNPFC SEI message specification.

In the semantics of nnpfc_prompt_present_flag, the following text may be added to define a new parameter textPrompt.

**nnpfc_prompt_present_flag** equal to 1 specifies that nnpfc_prompt is present and nnpfc_alignment_zero_bit_c syntax element may be present in the SEI message. nnpfc_prompt_present_flag equal to 0 specifies that nnpfc_prompt and nnpfc_alignment_zero_bit_c syntax elements are not present and that nnpfc_prompt is obtained from external means, not specified in this document.

- *When nnpfc_prompt_control_flag is equal to 1, the parameter textPrompt, defined as a string of characters, is derived as follows:*

    - *When nnpfc_prompt_present_flag is equal to 1, textPrompt is set equal to nnpfc_prompt*
    - *Otherwise (nnpfc_prompt_present_flag equal to 0), textPrompt is provided by external means not specified in this document.*

In addition, the following semantics changes of nnpfc_auxiliary_inp_idc, which indicates the type of the auxiliary data used as input to the NN model, are applied:

When nnpfc_auxiliary_inp_idc is equal to 2 or 3, *nnpfc_prompt_control_flag* shall be equal to 1.
When nnpfc_auxiliary_inp_idc is equal to 2 the auxiliary input data consists of textPrompt character values.

The derivation of the input tensors of the NNPF, as described in the VSEI specification may be modified as follows (changes are highlighted in italic underlined):

The process DeriveInputTensors( ), for deriving the input tensor inputTensor for a given vertical sample coordinate cTop and a horizontal sample coordinate cLeft specifying the top-left sample location for the patch of samples included in the input tensor, is specified as follows:

```
for( i = 0; i < numInputPics; i++ ) {
    convertedTextPrompt = convert_to_integer(textPrompt)
    if( nnpfc_inp_order_idc = = 0 )
        for( yP = −nnpfc_overlap; yP < inpPatchHeight + nnpfc_overlap; yP++)
            for( xP = −nnpfc_overlap; xP < inpPatchWidth + nnpfc_overlap; xP++ ) {
                inpVal = InpY( InpSampleVal( cTop + yP, cLeft + xP, CroppedHeight,
                    CroppedWidth, CroppedYPic[ i ], 0 ) )
                yPovlp = yP + nnpfc_overlap
                xPovlp = xP + nnpfc_overlap
                if( !nnpfc_component_last_flag )
                    inputTensor[ 0 ][ i ][ 0 ][ yPovlp ][ xPovlp ] = inpVal
                else
                    inputTensor[ 0 ][ i ][ yPovlp ][ xPovlp ][ 0 ] = inpVal
                if( nnpfc_auxiliary_inp_idc = = 1 || nnpfc_auxiliary_inp_idc = = 3 )
                    if( !nnpfc_component_last_flag )
                        inputTensor[ 0 ][ i ][ 1 ][ yPovlp ][ xPovlp ] = strengthControlScaledVal[ i ]
                    else
                        inputTensor[ 0 ][ i ][ yPovlp ][ xPovlp ][ 1 ] = strengthControlScaledVal[ i ]
                if( nnpfc_auxiliary_inp_idc = = 2 || nnpfc_auxiliary_inp_idc = = 3 ) {
                    idx = nnpfc_auxiliary_inp_idc − 1
                    if( !nnpfc_component_last_flag )
                        inputTensor[ 0 ][ i ][ idx ][ yPovlp ][ xPovlp ] = convertedTextPrompt
                    else
```

```
                    inputTensor[ 0 ][ i ][ yPovlp ][ xPovlp ][ idx ] = convertedTextPrompt
               }
           }
       else if( nnpfc_inp_order_idc == 1 )
         for( yP = −nnpfc_overlap; yP < inpPatchHeight + nnpfc_overlap; yP++)
           for( xP = −nnpfc_overlap; xP < inpPatchWidth + nnpfc_overlap; xP++ ) {
             inpCbVal = InpC( InpSampleVal( cTop + yP, cLeft + xP, CroppedHeight / SubHeightC,
                 CroppedWidth / SubWidthC, CroppedCbPic[ i ], 1 ) )
             inpCrVal = InpC( InpSampleVal( cTop + yP, cLeft + xP, CroppedHeight / SubHeightC,
                 CroppedWidth / SubWidthC, CroppedCrPic[ i ], 2 ) )
             yPovlp = yP + nnpfc_overlap
             xPovlp = xP + nnpfc_overlap
             if( !nnpfc_component_last_flag ) {
               inputTensor[ 0 ][ i ][ 0 ][ yPovlp ][ xPovlp ] = inpCbVal
               inputTensor[ 0 ][ i ][ 1 ][ yPovlp ][ xPovlp ] = inpCrVal
             } else {
               inputTensor[ 0 ][ i ][ yPovlp ][ xPovlp ][ 0 ] = inpCbVal
               inputTensor[ 0 ][ i ][ yPovlp ][ xPovlp ][ 1 ] = inpCrVal
             }
             if( nnpfc_auxiliary_inp_idc == 1 || nnpfc_auxiliary_inp_idc == 3)
               if( !nnpfc_component_last_flag )
                 inputTensor[ 0 ][ i ][ 2 ][ yPovlp ][ xPovlp ] = strengthControlScaledVal[ i ]
               else
                 inputTensor[ 0 ][ i ][ yPovlp ][ xPovlp ][ 2 ] = strengthControlScaledVal[ i ]
             if( nnpfc_auxiliary_inp_idc == 2 || nnpfc_auxiliary_inp_idc == 3){
               idx = nnpfc_auxiliary_inp_idc
               if( !nnpfc_component_last_flag )
                 inputTensor[ idx ][ i ][ idx ][ yPovlp ][ xPovlp ] = convertedTextPrompt
               else
                 inputTensor[ idx ][ i ][ yPovlp ][ xPovlp ][ idx ] = convertedTextPrompt
             }
           }
       else if( nnpfc_inp_order_idc == 2 )
         for( yP = −nnpfc_overlap; yP < inpPatchHeight + nnpfc_overlap; yP++)
           for( xP = −nnpfc_overlap; xP < inpPatchWidth + nnpfc_overlap; xP++ ) {
             yY = cTop + yP
             xY = cLeft + xP
             yC = yY / SubHeightC
             xC = xY / SubWidthC
             inpYVal = InpY( InpSampleVal( yY, xY, CroppedHeight,
                 CroppedWidth, CroppedYPic[ i ], 0 ) )
             inpCbVal = InpC( InpSampleVal( yC, xC, CroppedHeight / SubHeightC,
                 CroppedWidth / SubWidthC, CroppedCbPic[ i ], 1 ) )
             inpCrVal = InpC( InpSampleVal( yC, xC, CroppedHeight / SubHeightC,
                 CroppedWidth / SubWidthC, CroppedCrPic[ i ], 2 ) )
             yPovlp = yP + nnpfc_overlap
             xPovlp = xP + nnpfc_overlap
             if( !nnpfc_component_last_flag ) {
               inputTensor[ 0 ][ i ][ 0 ][ yPovlp ][ xPovlp ] = inpYVal
               inputTensor[ 0 ][ i ][ 1 ][ yPovlp ][ xPovlp ] = inpCbVal
               inputTensor[ 0 ][ i ][ 2 ][ yPovlp ][ xPovlp ] = inpCrVal
             } else {
               inputTensor[ 0 ][ i ][ yPovlp ][ xPovlp ][ 0 ] = inpYVal
               inputTensor[ 0 ][ i ][ yPovlp ][ xPovlp ][ 1 ] = inpCbVal
               inputTensor[ 0 ][ i ][ yPovlp ][ xPovlp ][ 2 ] = inpCrVal
             }
             if( nnpfc_auxiliary_inp_idc == 1 || nnpfc_auxiliary_inp_idc == 3)
               if( !nnpfc_component_last_flag )
                 inputTensor[ 0 ][ i ][ 3 ][ yPovlp ][ xPovlp ] = strengthControlScaledVal[ i ]
               else
                 inputTensor[ 0 ][ i ][ yPovlp ][ xPovlp ][ 3 ] = strengthControlScaledVal[ i ]
```

```
                    if( nnpfc_auxiliary_inp_idc  = =  2 | | nnpfc_auxiliary_inp_idc  = =  3) {
                        idx = nnpfc_auxiliary_inp_idc + 1
                        if( !nnpfc_component_last_flag )
                            inputTensor[ idx ][ i ][ idx ][ yPovlp ][ xPovlp ] = convertedTextPrompt
                        else
                            inputTensor[ idx ][ i ][ yPovlp ][ xPovlp ][ idx ] = convertedTextPrompt
                    }
                }
            else if( nnpfc_inp_order_idc = = 3 )
                for( yP = −nnpfc_overlap; yP < inpPatchHeight + nnpfc_overlap; yP++)
                    for( xP = −nnpfc_overlap; xP < inpPatchWidth + nnpfc_overlap; xP++ ) {
                        yTL = cTop + yP * 2
                        xTL = cLeft + xP * 2
                        yBR = yTL + 1
                        xBR = xTL + 1
                        yC = cTop / 2 + yP
                        xC = cLeft / 2 + xP
                        inpTLVal = InpY( InpSampleVal( yTL, xTL, CroppedHeight,
                            CroppedWidth, CroppedYPic[ i ], 0 ) )
                        inpTRVal = InpY( InpSampleVal( yTL, xBR, CroppedHeight,
                            CroppedWidth, CroppedYPic[ i ], 0 ) )
                        inpBLVal = InpY( InpSampleVal( yBR, xTL, CroppedHeight,
                            CroppedWidth, CroppedYPic[ i ], 0 ) )
                        inpBRVal = InpY( InpSampleVal( yBR, xBR, CroppedHeight,
                            CroppedWidth, CroppedYPic[ i ], 0 ) )
                        inpCbVal = InpC( InpSampleVal( yC, xC, CroppedHeight / 2,
                            CroppedWidth / 2, CroppedCbPic[ i ], 1 ) )
                        inpCrVal = InpC( InpSampleVal( yC, xC, CroppedHeight / 2,
                            CroppedWidth / 2, CroppedCrPic[ i ], 2 ) )
                        yPovlp = yP + nnpfc_overlap
                        xPovlp = xP + nnpfc_overlap
                        if( !nnpfc_component_last_flag ) {
                          inputTensor[ 0 ][ i ][ 0 ][ yPovlp ][ xPovlp ] = inpTLVal
                          inputTensor[ 0 ][ i ][ 1 ][ yPovlp ][ xPovlp ] = inpTRVal
                          inputTensor[ 0 ][ i ][ 2 ][ yPovlp ][ xPovlp ] = inpBLVal
                          inputTensor[ 0 ][ i ][ 3 ][ yPovlp ][ xPovlp ] = inpBRVal
                          inputTensor[ 0 ][ i ][ 4 ][ yPovlp ][ xPovlp ] = inpCbVal
                          inputTensor[ 0 ][ i ][ 5 ][ yPovlp ][ xPovlp ] = inpCrVal
                        } else {
                          inputTensor[ 0 ][ i ][ yPovlp ][ xPovlp ][ 0 ] = inpTLVal
                          inputTensor[ 0 ][ i ][ yPovlp ][ xPovlp ][ 1 ] = inpTRVal
                          inputTensor[ 0 ][ i ][ yPovlp ][ xPovlp ][ 2 ] = inpBLVal
                          inputTensor[ 0 ][ i ][ yPovlp ][ xPovlp ][ 3 ] = inpBRVal
                          inputTensor[ 0 ][ i ][ yPovlp ][ xPovlp ][ 4 ] = inpCbVal
                          inputTensor[ 0 ][ i ][ yPovlp ][ xPovlp ][ 5 ] = inpCrVal
                        }
                        if( nnpfc_auxiliary_inp_idc = = 1 | | nnpfc_auxiliary_inp_idc = = 3 )
                          if( !nnpfc_component_last_flag )
                            inputTensor[ 0 ][ i ][ 6 ][ yPovlp ][ xPovlp ] = strengthControlScaledVal[ i ]
                          else
                            inputTensor[ 0 ][ i ][ yPovlp ][ xPovlp ][ 6 ] = strengthControlScaledVal[ i ]
                        if( nnpfc_auxiliary_inp_idc  = =  2 | | nnpfc_auxiliary_inp_idc  = =  3) {
                          idx = nnpfc_auxiliary_inp_idc + 4
                          if( !nnpfc_component_last_flag )
                            inputTensor[ idx ][ i ][ idx ][ yPovlp ][ xPovlp ] = convertedTextPrompt
                          else
                            inputTensor[ idx ][ i ][ yPovlp ][ xPovlp ][ idx ] = convertedTextPrompt
                        }
                    }
        }
```

**Feature(s) associated with the sixth embodiment are provided herein.**
The sixth embodiment comprises deriving/adapting the input tensors of the NNPF depending on the control flag.
In a variant of the third embodiment, the text prompt signaled in the SEI message or provided by external means is used, possibly after conversion to an integer value (or to another format adapted to the NNPF, such as floating point, a vector of floats), as value of each element of an additional 2D input tensor of the NNPF, possibly with dimensions corresponding to the basic patch used by the NNPF, as defined by parameters inpPatchWidth, inpPatchHeight and nnpfc_overlap, as defined in the NNPFC SEI message specification.
In the semantics of nnpfc_prompt_present_flag, the following text may be added to define a new parameter textPrompt.
**nnpfc_prompt_present_flag** equal to 1 specifies that nnpfc_prompt is present and nnpfc_alignment_zero_bit_c syntax element may be present in the SEI message. nnpfc_prompt_present flag equal to 0 specifies that nnpfc_prompt and nnpfc_alignment_zero_bit_c syntax elements are not present and that nnpfc_prompt is obtained from external means, not specified in this document.

- *When nnpfc_prompt_control_flag is equal to 1, the parameter textPrompt, defined as a string of characters, is derived as follows:*

    - *When nnpfc_num_prompts is equal to 1, promptIdx is set equal to 0 and textPrompt is set equal to nnpfc_text_prompt[ 0 ]*
    - *Otherwise when nnpfc_num_prompts is greater than 1, promptIdx is provided by external means not specified in this document, with promptIdx in the interval [0, nnpfc_num_prompts[ and textPrompt is set equal to nnpfc_text_prompt[ promptIdx ]*
    - *Otherwise (nnpfc_num_prompts equal to 0), textPrompt is provided by external means not specified in this document.*

In addition, the following semantics changes of nnpfc_auxiliary_inp_idc, which indicates the type of the auxiliary data used as input to the NN model, are applied:

When nnpfc_auxiliary_inp_idc is equal to 2 or 3, *nnpfc_prompt_control_flag* shall be equal to 1.
When nnpfc_auxiliary_inp_idc is equal to 2 the auxiliary input data consists of textPrompt character values.

The derivation of the input tensors of the NNPF, as described in the VSEI specification may be modified as follows (changes are highlighted in italic underlined):
The process DeriveInputTensors( ), for deriving the input tensor inputTensor for a given vertical sample coordinate cTop and a horizontal sample coordinate cLeft specifying the top-left sample location for the patch of samples included in the input tensor, is specified as follows:

```
for( i = 0; i < numInputPics; i++ ) {
    convertedTextPrompt = convert_to_integer(textPrompt)
    if( nnpfc_inp_order_idc = = 0 )
        for( yP = −nnpfc_overlap; yP < inpPatchHeight + nnpfc_overlap; yP++)
            for( xP = −nnpfc_overlap; xP < inpPatchWidth + nnpfc_overlap; xP++ ) {
```

```
            inpVal = InpY( InpSampleVal( cTop + yP, cLeft + xP, CroppedHeight,
                CroppedWidth, CroppedYPic[ i ], 0 ) )
            yPovlp = yP + nnpfc_overlap
            xPovlp = xP + nnpfc_overlap
            if( !nnpfc_component_last_flag )
              inputTensor[ 0 ][ i ][ 0 ][ yPovlp ][ xPovlp ] = inpVal
            else
              inputTensor[ 0 ][ i ][ yPovlp ][ xPovlp ][ 0 ] = inpVal
            if( nnpfc_auxiliary_inp_idc == 1 )
              if( !nnpfc_component_last_flag )
                inputTensor[ 0 ][ i ][ 1 ][ yPovlp ][ xPovlp ] = strengthControlScaledVal[ i ]
              else
                inputTensor[ 0 ][ i ][ yPovlp ][ xPovlp ][ 1 ] = strengthControlScaledVal[ i ]
              if( nnpfc_auxiliary_inp_idc == 2 || nnpfc_auxiliary_inp_idc == 3 ) {
                idx = nnpfc_auxiliary_inp_idc -1
                if( !nnpfc_component_last_flag )
                  inputTensor[ 0 ][ i ][ idx ][ yPovlp ][ xPovlp ] = convertedTextPrompt
                else
                  inputTensor[ 0 ][ i ][ yPovlp ][ xPovlp ][ idx ] = convertedTextPrompt
              }
            }
      else if( nnpfc_inp_order_idc == 1 )
        for( yP = −nnpfc_overlap; yP < inpPatchHeight + nnpfc_overlap; yP++)
          for( xP = −nnpfc_overlap; xP < inpPatchWidth + nnpfc_overlap; xP++ ) {
            inpCbVal = InpC( InpSampleVal( cTop + yP, cLeft + xP, CroppedHeight / SubHeightC,
                CroppedWidth / SubWidthC, CroppedCbPic[ i ], 1 ) )
            inpCrVal = InpC( InpSampleVal( cTop + yP, cLeft + xP, CroppedHeight / SubHeightC,
                CroppedWidth / SubWidthC, CroppedCrPic[ i ], 2 ) )
            yPovlp = yP + nnpfc_overlap
            xPovlp = xP + nnpfc_overlap
            if( !nnpfc_component_last_flag ) {
              inputTensor[ 0 ][ i ][ 0 ][ yPovlp ][ xPovlp ] = inpCbVal
              inputTensor[ 0 ][ i ][ 1 ][ yPovlp ][ xPovlp ] = inpCrVal
            } else {
              inputTensor[ 0 ][ i ][ yPovlp ][ xPovlp ][ 0 ] = inpCbVal
              inputTensor[ 0 ][ i ][ yPovlp ][ xPovlp ][ 1 ] = inpCrVal
            }
            if( nnpfc_auxiliary_inp_idc == 1 )
              if( !nnpfc_component_last_flag )
                inputTensor[ 0 ][ i ][ 2 ][ yPovlp ][ xPovlp ] = strengthControlScaledVal[ i ]
              else
                inputTensor[ 0 ][ i ][ yPovlp ][ xPovlp ][ 2 ] = strengthControlScaledVal[ i ]
              if( nnpfc_auxiliary_inp_idc == 2 || nnpfc_auxiliary_inp_idc == 3 ) {
                idx = nnpfc_auxiliary_inp_idc
                if( !nnpfc_component_last_flag )
                  inputTensor[ idx ][ i ][ idx ][ yPovlp ][ xPovlp ] = convertedTextPrompt
                else
                  inputTensor[ idx ][ i ][ yPovlp ][ xPovlp ][ idx ] = convertedTextPrompt
              }
            }
      else if( nnpfc_inp_order_idc == 2 )
        for( yP = −nnpfc_overlap; yP < inpPatchHeight + nnpfc_overlap; yP++)
          for( xP = −nnpfc_overlap; xP < inpPatchWidth + nnpfc_overlap; xP++ ) {
            yY = cTop + yP
            xY = cLeft + xP
            yC = yY / SubHeightC
            xC = xY / SubWidthC
            inpYVal = InpY( InpSampleVal( yY, xY, CroppedHeight,
                CroppedWidth, CroppedYPic[ i ], 0 ) )
            inpCbVal = InpC( InpSampleVal( yC, xC, CroppedHeight / SubHeightC,
                CroppedWidth / SubWidthC, CroppedCbPic[ i ], 1 ) )
```

```
inpCrVal = InpC( InpSampleVal( yC, xC, CroppedHeight / SubHeightC,
    CroppedWidth / SubWidthC, CroppedCrPic[ i ], 2 ) )
yPovlp = yP + nnpfc_overlap
xPovlp = xP + nnpfc_overlap
if( !nnpfc_component_last_flag ) {
  inputTensor[ 0 ][ i ][ 0 ][ yPovlp ][ xPovlp ] = inpYVal
  inputTensor[ 0 ][ i ][ 1 ][ yPovlp ][ xPovlp ] = inpCbVal
  inputTensor[ 0 ][ i ][ 2 ][ yPovlp ][ xPovlp ] = inpCrVal
} else {
  inputTensor[ 0 ][ i ][ yPovlp ][ xPovlp ][ 0 ] = inpYVal
  inputTensor[ 0 ][ i ][ yPovlp ][ xPovlp ][ 1 ] = inpCbVal
  inputTensor[ 0 ][ i ][ yPovlp ][ xPovlp ][ 2 ] = inpCrVal
}
if( nnpfc_auxiliary_inp_idc == 1 )
  if( !nnpfc_component_last_flag )
    inputTensor[ 0 ][ i ][ 3 ][ yPovlp ][ xPovlp ] = strengthControlScaledVal[ i ]
  else
    inputTensor[ 0 ][ i ][ yPovlp ][ xPovlp ][ 3 ] = strengthControlScaledVal[ i ]
  if( nnpfc_auxiliary_inp_idc == 2 || nnpfc_auxiliary_inp_idc == 3 ) {
    idx = nnpfc_auxiliary_inp_idc + 1
    if( !nnpfc_component_last_flag )
      inputTensor[ idx ][ i ][ idx ][ yPovlp ][ xPovlp ] = convertedTextPrompt
    else
      inputTensor[ idx ][ i ][ yPovlp ][ xPovlp ][ idx ] = convertedTextPrompt
  }
}
else if( nnpfc_inp_order_idc == 3 )
  for( yP = −nnpfc_overlap; yP < inpPatchHeight + nnpfc_overlap; yP++)
    for( xP = −nnpfc_overlap; xP < inpPatchWidth + nnpfc_overlap; xP++ ) {
      yTL = cTop + yP * 2
      xTL = cLeft + xP * 2
      yBR = yTL + 1
      xBR = xTL + 1
      yC = cTop / 2 + yP
      xC = cLeft / 2 + xP
      inpTLVal = InpY( InpSampleVal( yTL, xTL, CroppedHeight,
          CroppedWidth, CroppedYPic[ i ], 0 ) )
      inpTRVal = InpY( InpSampleVal( yTL, xBR, CroppedHeight,
          CroppedWidth, CroppedYPic[ i ], 0 ) )
      inpBLVal = InpY( InpSampleVal( yBR, xTL, CroppedHeight,
          CroppedWidth, CroppedYPic[ i ], 0 ) )
      inpBRVal = InpY( InpSampleVal( yBR, xBR, CroppedHeight,
          CroppedWidth, CroppedYPic[ i ], 0 ) )
      inpCbVal = InpC( InpSampleVal( yC, xC, CroppedHeight / 2,
          CroppedWidth / 2, CroppedCbPic[ i ], 1 ) )
      inpCrVal = InpC( InpSampleVal( yC, xC, CroppedHeight / 2,
          CroppedWidth / 2, CroppedCrPic[ i ], 2 ) )
      yPovlp = yP + nnpfc_overlap
      xPovlp = xP + nnpfc_overlap
      if( !nnpfc_component_last_flag ) {
        inputTensor[ 0 ][ i ][ 0 ][ yPovlp ][ xPovlp ] = inpTLVal
        inputTensor[ 0 ][ i ][ 1 ][ yPovlp ][ xPovlp ] = inpTRVal
        inputTensor[ 0 ][ i ][ 2 ][ yPovlp ][ xPovlp ] = inpBLVal
        inputTensor[ 0 ][ i ][ 3 ][ yPovlp ][ xPovlp ] = inpBRVal
        inputTensor[ 0 ][ i ][ 4 ][ yPovlp ][ xPovlp ] = inpCbVal
        inputTensor[ 0 ][ i ][ 5 ][ yPovlp ][ xPovlp ] = inpCrVal
      } else {
        inputTensor[ 0 ][ i ][ yPovlp ][ xPovlp ][ 0 ] = inpTLVal
        inputTensor[ 0 ][ i ][ yPovlp ][ xPovlp ][ 1 ] = inpTRVal
        inputTensor[ 0 ][ i ][ yPovlp ][ xPovlp ][ 2 ] = inpBLVal
        inputTensor[ 0 ][ i ][ yPovlp ][ xPovlp ][ 3 ] = inpBRVal
```

```
inputTensor[ 0 ][ i ][ yPovlp ][ xPovlp ][ 4 ] = inpCbVal
inputTensor[ 0 ][ i ][ yPovlp ][ xPovlp ][ 5 ] = inpCrVal
}
if( nnpfc_auxiliary_inp_idc  = =  1 )
  if( !nnpfc_component_last_flag )
    inputTensor[ 0 ][ i ][ 6 ][ yPovlp ][ xPovlp ] = strengthControlScaledVal[ i ]
  else
    inputTensor[ 0 ][ i ][ yPovlp ][ xPovlp ][ 6 ] = strengthControlScaledVal[ i ]
  if( nnpfc_auxiliary_inp_idc  = =  2 || nnpfc_auxiliary_inp_idc  = =  3) {
    idx = nnpfc_auxiliary_inp_idc + 4
    if( !nnpfc_component_last_flag )
      inputTensor[ idx ][ i ][ idx ][ yPovlp ][ xPovlp ] = convertedTextPrompt
    else
      inputTensor[ idx ][ i ][ yPovlp ][ xPovlp ][ idx ] = convertedTextPrompt
  }
}
}
```

In the variant where nnpfc_num_prompts_minus 1 is signaled instead of nnpfc_num_prompts, in the semantics of nnpfc_prompt_present_flag, the following text is added to define a new parameter textPrompt.

**nnpfc_prompt_present_flag** equal to 1 specifies that nnpfc_prompt is present and nnpfc_alignment_zero_bit_c syntax element may be present in the SEI message. nnpfc_prompt_present_flag equal to 0 specifies that nnpfc_prompt and nnpfc_alignment_zero_bit_c syntax elements are not present and that nnpfc_prompt is obtained from external means, not specified in this document.

- *When nnpfc_prompt_control_flag is equal to 1, the parameter textPrompt, defined as a string of characters, is derived as follows:*

  - *When nnpfc_num_prompts_minus1 is equal to 0, promptIdx is set equal to 0 and textPrompt is set equal to nnpfc_text_prompt[ 0 ]*
  - *Otherwise when nnpfc_num_prompts is greater than 0, promptIdx is provided by external means not specified in this document, with promptIdx in the interval [0, nnpfc_num_prompts_minus1] and textPrompt is set equal to nnpfc_text_prompt[ promptIdx ]*

In addition, the following semantics changes are applied:

When nnpfc_auxiliary_inp_idc is equal to 2 or 3, *nnpfc_prompt_control_flag* shall be equal to 1.
When nnpfc_auxiliary_inp_idc is equal to 2 the auxiliary input data consists of textPrompt character values.

The derivation of the input tensors of the NNPF, as described in the VSEI specification may be modified as follows (changes are highlighted in italic underlined):
The process DeriveInputTensors( ), for deriving the input tensor inputTensor for a given vertical sample coordinate cTop and a horizontal sample coordinate cLeft specifying the top-left sample location for the patch of samples included in the input tensor, is specified as follows:

```
for( i = 0; i < numInputPics; i++ ) {
  convertedTextPrompt = convert_to_integer(textPrompt)
  if( nnpfc_inp_order_idc  = =  0 )
    for( yP = −nnpfc_overlap; yP < inpPatchHeight + nnpfc_overlap; yP++)
      for( xP = −nnpfc_overlap; xP < inpPatchWidth + nnpfc_overlap; xP++ ) {
```

```
inpVal = InpY( InpSampleVal( cTop + yP, cLeft + xP, CroppedHeight,
    CroppedWidth, CroppedYPic[ i ], 0 ) )
yPovlp = yP + nnpfc_overlap
xPovlp = xP + nnpfc_overlap
if( !nnpfc_component_last_flag )
  inputTensor[ 0 ][ i ][ 0 ][ yPovlp ][ xPovlp ] = inpVal
else
  inputTensor[ 0 ][ i ][ yPovlp ][ xPovlp ][ 0 ] = inpVal
if( nnpfc_auxiliary_inp_idc == 1 )
  if( !nnpfc_component_last_flag )
      inputTensor[ 0 ][ i ][ 1 ][ yPovlp ][ xPovlp ] = strengthControlScaledVal[ i ]
  else
      inputTensor[ 0 ][ i ][ yPovlp ][ xPovlp ][ 1 ] = strengthControlScaledVal[ i ]
  if( nnpfc_auxiliary_inp_idc == 2 || nnpfc_auxiliary_inp_idc == 3 ) {
      idx = nnpfc_auxiliary_inp_idc - 1
      if( !nnpfc_component_last_flag )
          inputTensor[ 0 ][ i ][ idx ][ yPovlp ][ xPovlp ] = convertedTextPrompt
      else
          inputTensor[ 0 ][ i ][ yPovlp ][ xPovlp ][ idx ] = convertedTextPrompt
  }
}
else if( nnpfc_inp_order_idc == 1 )
 for( yP = −nnpfc_overlap; yP < inpPatchHeight + nnpfc_overlap; yP++ )
     for( xP = −nnpfc_overlap; xP < inpPatchWidth + nnpfc_overlap; xP++ ) {
         inpCbVal = InpC( InpSampleVal( cTop + yP, cLeft + xP, CroppedHeight / SubHeightC,
             CroppedWidth / SubWidthC, CroppedCbPic[ i ], 1 ) )
         inpCrVal = InpC( InpSampleVal( cTop + yP, cLeft + xP, CroppedHeight / SubHeightC,
             CroppedWidth / SubWidthC, CroppedCrPic[ i ], 2 ) )
         yPovlp = yP + nnpfc_overlap
         xPovlp = xP + nnpfc_overlap
         if( !nnpfc_component_last_flag ) {
           inputTensor[ 0 ][ i ][ 0 ][ yPovlp ][ xPovlp ] = inpCbVal
           inputTensor[ 0 ][ i ][ 1 ][ yPovlp ][ xPovlp ] = inpCrVal
         } else {
           inputTensor[ 0 ][ i ][ yPovlp ][ xPovlp ][ 0 ] = inpCbVal
           inputTensor[ 0 ][ i ][ yPovlp ][ xPovlp ][ 1 ] = inpCrVal
         }
         if( nnpfc_auxiliary_inp_idc == 1 )
           if( !nnpfc_component_last_flag )
               inputTensor[ 0 ][ i ][ 2 ][ yPovlp ][ xPovlp ] = strengthControlScaledVal[ i ]
           else
               inputTensor[ 0 ][ i ][ yPovlp ][ xPovlp ][ 2 ] = strengthControlScaledVal[ i ]
           if( nnpfc_auxiliary_inp_idc == 2 || nnpfc_auxiliary_inp_idc == 3 ) {
               idx = nnpfc_auxiliary_inp_idc
               if( !nnpfc_component_last_flag )
                   inputTensor[ idx ][ i ][ idx ][ yPovlp ][ xPovlp ] = convertedTextPrompt
               else
                   inputTensor[ idx ][ i ][ yPovlp ][ xPovlp ][ idx ] = convertedTextPrompt
           }
     }
else if( nnpfc_inp_order_idc == 2 )
 for( yP = −nnpfc_overlap; yP < inpPatchHeight + nnpfc_overlap; yP++ )
     for( xP = −nnpfc_overlap; xP < inpPatchWidth + nnpfc_overlap; xP++ ) {
         yY = cTop + yP
         xY = cLeft + xP
         yC = yY / SubHeightC
         xC = xY / SubWidthC
         inpYVal = InpY( InpSampleVal( yY, xY, CroppedHeight,
             CroppedWidth, CroppedYPic[ i ], 0 ) )
         inpCbVal = InpC( InpSampleVal( yC, xC, CroppedHeight / SubHeightC,
             CroppedWidth / SubWidthC, CroppedCbPic[ i ], 1 ) )
```

```
inpCrVal = InpC( InpSampleVal( yC, xC, CroppedHeight / SubHeightC,
    CroppedWidth / SubWidthC, CroppedCrPic[ i ], 2 ) )
yPovlp = yP + nnpfc_overlap
xPovlp = xP + nnpfc_overlap
if( !nnpfc_component_last_flag ) {
  inputTensor[ 0 ][ i ][ 0 ][ yPovlp ][ xPovlp ] = inpYVal
  inputTensor[ 0 ][ i ][ 1 ][ yPovlp ][ xPovlp ] = inpCbVal
  inputTensor[ 0 ][ i ][ 2 ][ yPovlp ][ xPovlp ] = inpCrVal
} else {
  inputTensor[ 0 ][ i ][ yPovlp ][ xPovlp ][ 0 ] = inpYVal
  inputTensor[ 0 ][ i ][ yPovlp ][ xPovlp ][ 1 ] = inpCbVal
  inputTensor[ 0 ][ i ][ yPovlp ][ xPovlp ][ 2 ] = inpCrVal
}
if( nnpfc_auxiliary_inp_idc = = 1 )
  if( !nnpfc_component_last_flag )
    inputTensor[ 0 ][ i ][ 3 ][ yPovlp ][ xPovlp ] = strengthControlScaledVal[ i ]
  else
    inputTensor[ 0 ][ i ][ yPovlp ][ xPovlp ][ 3 ] = strengthControlScaledVal[ i ]
  if( nnpfc_auxiliary_inp_idc = = 2 | | nnpfc_auxiliary_inp_idc = = 3 ) {
    idx = nnpfc_auxiliary_inp_idc + 1
    if( !nnpfc_component_last_flag )
      inputTensor[ idx ][ i ][ idx ][ yPovlp ][ xPovlp ] = convertedTextPrompt
    else
      inputTensor[ idx ][ i ][ yPovlp ][ xPovlp ][ idx ] = convertedTextPrompt
  }
}
else if( nnpfc_inp_order_idc = = 3 )
  for( yP = −nnpfc_overlap; yP < inpPatchHeight + nnpfc_overlap; yP++)
    for( xP = −nnpfc_overlap; xP < inpPatchWidth + nnpfc_overlap; xP++ ) {
      yTL = cTop + yP * 2
      xTL = cLeft + xP * 2
      yBR = yTL + 1
      xBR = xTL + 1
      yC = cTop / 2 + yP
      xC = cLeft / 2 + xP
      inpTLVal = InpY( InpSampleVal( yTL, xTL, CroppedHeight,
          CroppedWidth, CroppedYPic[ i ], 0 ) )
      inpTRVal = InpY( InpSampleVal( yTL, xBR, CroppedHeight,
          CroppedWidth, CroppedYPic[ i ], 0 ) )
      inpBLVal = InpY( InpSampleVal( yBR, xTL, CroppedHeight,
          CroppedWidth, CroppedYPic[ i ], 0 ) )
      inpBRVal = InpY( InpSampleVal( yBR, xBR, CroppedHeight,
          CroppedWidth, CroppedYPic[ i ], 0 ) )
      inpCbVal = InpC( InpSampleVal( yC, xC, CroppedHeight / 2,
          CroppedWidth / 2, CroppedCbPic[ i ], 1 ) )
      inpCrVal = InpC( InpSampleVal( yC, xC, CroppedHeight / 2,
          CroppedWidth / 2, CroppedCrPic[ i ], 2 ) )
      yPovlp = yP + nnpfc_overlap
      xPovlp = xP + nnpfc_overlap
      if( !nnpfc_component_last_flag ) {
        inputTensor[ 0 ][ i ][ 0 ][ yPovlp ][ xPovlp ] = inpTLVal
        inputTensor[ 0 ][ i ][ 1 ][ yPovlp ][ xPovlp ] = inpTRVal
        inputTensor[ 0 ][ i ][ 2 ][ yPovlp ][ xPovlp ] = inpBLVal
        inputTensor[ 0 ][ i ][ 3 ][ yPovlp ][ xPovlp ] = inpBRVal
        inputTensor[ 0 ][ i ][ 4 ][ yPovlp ][ xPovlp ] = inpCbVal
        inputTensor[ 0 ][ i ][ 5 ][ yPovlp ][ xPovlp ] = inpCrVal
      } else {
        inputTensor[ 0 ][ i ][ yPovlp ][ xPovlp ][ 0 ] = inpTLVal
        inputTensor[ 0 ][ i ][ yPovlp ][ xPovlp ][ 1 ] = inpTRVal
        inputTensor[ 0 ][ i ][ yPovlp ][ xPovlp ][ 2 ] = inpBLVal
        inputTensor[ 0 ][ i ][ yPovlp ][ xPovlp ][ 3 ] = inpBRVal
```

```
            inputTensor[ 0 ][ i ][ yPovlp ][ xPovlp ][ 4 ] = inpCbVal
            inputTensor[ 0 ][ i ][ yPovlp ][ xPovlp ][ 5 ] = inpCrVal
          }
          if( nnpfc_auxiliary_inp_idc  = =  1 )
            if( !nnpfc_component_last_flag )
              inputTensor[ 0 ][ i ][ 6 ][ yPovlp ][ xPovlp ] = strengthControlScaledVal[ i ]
            else
              inputTensor[ 0 ][ i ][ yPovlp ][ xPovlp ][ 6 ] = strengthControlScaledVal[ i ]
          if( nnpfc_auxiliary_inp_idc  = =  2 || nnpfc_auxiliary_inp_idc  = =  3 ) {
            idx = nnpfc_auxiliary_inp_idc + 4
            if( !nnpfc_component_last_flag )
              inputTensor[ idx ][ i ][ idx ][ yPovlp ][ xPovlp ] = convertedTextPrompt
            else
              inputTensor[ idx ][ i ][ yPovlp ][ xPovlp ][ idx ] = convertedTextPrompt
          }
        }
      }
```

**Feature(s) associated with the seventh embodiment are provided herein.**

The seventh embodiment comprises deriving/adapting the input tensors of the NNPF depending on the control flag.

In a variant of the fourth embodiment, the text prompt signaled in the SEI message or provided by external means is used, possibly after conversion to an integer value (or to another format adapted to the NNPF, such as floating point, a vector of floats), as value of each element of an additional 2D input tensor of the NNPF, possibly with dimensions corresponding to the basic patch used by the NNPF, as defined by parameters inpPatchWidth, inpPatchHeight and nnpfc_overlap, as defined in the NNPFC SEI message specification.

In the semantics of nnpfc_prompt_present_flag, the following text may be added to define a new parameter textPrompt.

**nnpfc_prompt_present_flag** equal to 1 specifies that nnpfc_prompt is present and nnpfc_alignment_zero_bit_c syntax element may be present in the SEI message. nnpfc_prompt_present_flag equal to 0 specifies that nnpfc_prompt and nnpfc_alignment_zero_bit_c syntax elements are not present and that nnpfc_prompt is obtained from external means, not specified in this document.

- *When nnpfc_num_prompts is larger than 0, the parameter textPrompt, defined as a string of characters, and the parameter promptIdx, are derived as follows:*

  - *When nnpfc_num_prompts is equal to 1, promptIdx is set equal to 0 and textPrompt is set equal to nnpfc_text_prompt[ 0 ].*
  - *Otherwise (nnpfc_num_prompts not equal to 1), promptIdx is provided by external means not specified in this document, with promptIdx in the interval [0, nnpfc_num_prompts[ and textPrompt is set equal to nnpfc_text_prompt[ promptIdx ].*

In addition, the following semantics changes of nnpfc_auxiliary_inp_idc, which indicates the type of the auxiliary data used as input to the NN model, are applied:

When nnpfc_auxiliary_inp_idc is equal to 2 or 3, *nnpfc_prompt_control_flag* shall be equal to 1.
When nnpfc_auxiliary_inp_idc is equal to 2 the auxiliary input data consists of textPrompt character values.

The derivation of the input tensors of the NNPF, as described in the VSEI specification may be modified as follows (changes are highlighted in italic underlined):
The process DeriveInputTensors( ), for deriving the input tensor inputTensor for a given vertical sample coordinate cTop and a horizontal sample coordinate cLeft specifying the top-left sample location for the patch of samples included in the input tensor, is specified as follows:

- *The following applies:*

```
for( i = 0; i < numInputPics; i++ ) {
    convertedTextPrompt = convert_to_integer(textPrompt)
    if( nnpfc_inp_order_idc  = =  0 )
        for( yP = −nnpfc_overlap; yP < inpPatchHeight + nnpfc_overlap; yP++)
            for( xP = −nnpfc_overlap; xP < inpPatchWidth + nnpfc_overlap; xP++ ) {
                inpVal = InpY( InpSampleVal( cTop + yP, cLeft + xP, CroppedHeight,
                    CroppedWidth, CroppedYPic[ i ], 0 ) )
                yPovlp = yP + nnpfc_overlap
                xPovlp = xP + nnpfc_overlap
                if( !nnpfc_component_last_flag )
                    inputTensor[ 0 ][ i ][ 0 ][ yPovlp ][ xPovlp ] = inpVal
                else
                    inputTensor[ 0 ][ i ][ yPovlp ][ xPovlp ][ 0 ] = inpVal
                if( nnpfc_auxiliary_inp_idc  = =  1 )
                    if( !nnpfc_component_last_flag )
                        inputTensor[ 0 ][ i ][ 1 ][ yPovlp ][ xPovlp ] = strengthControlScaledVal[ i ]
                    else
                        inputTensor[ 0 ][ i ][ yPovlp ][ xPovlp ][ 1 ] = strengthControlScaledVal[ i ]
                if( nnpfc_auxiliary_inp_idc  = =  2 | | nnpfc_auxiliary_inp_idc  = =  3 ) {
                    idx = nnpfc_auxiliary_inp_idc − 1
                    if( !nnpfc_component_last_flag )
                        inputTensor[ 0 ][ i ][ idx ][ yPovlp ][ xPovlp ] = convertedTextPrompt
                    else
                        inputTensor[ 0 ][ i ][ yPovlp ][ xPovlp ][ idx ] = convertedTextPrompt
                }
            }
    else if( nnpfc_inp_order_idc  = =  1 )
        for( yP = −nnpfc_overlap; yP < inpPatchHeight + nnpfc_overlap; yP++)
            for( xP = −nnpfc_overlap; xP < inpPatchWidth + nnpfc_overlap; xP++ ) {
                inpCbVal = InpC( InpSampleVal( cTop + yP, cLeft + xP, CroppedHeight / SubHeightC,
                    CroppedWidth / SubWidthC, CroppedCbPic[ i ], 1 ) )
                inpCrVal = InpC( InpSampleVal( cTop + yP, cLeft + xP, CroppedHeight / SubHeightC,
                    CroppedWidth / SubWidthC, CroppedCrPic[ i ], 2 ) )
                yPovlp = yP + nnpfc_overlap
                xPovlp = xP + nnpfc_overlap
                if( !nnpfc_component_last_flag ) {
                    inputTensor[ 0 ][ i ][ 0 ][ yPovlp ][ xPovlp ] = inpCbVal
                    inputTensor[ 0 ][ i ][ 1 ][ yPovlp ][ xPovlp ] = inpCrVal
                } else {
                    inputTensor[ 0 ][ i ][ yPovlp ][ xPovlp ][ 0 ] = inpCbVal
                    inputTensor[ 0 ][ i ][ yPovlp ][ xPovlp ][ 1 ] = inpCrVal
                }
                if( nnpfc_auxiliary_inp_idc  = =  1 )
                    if( !nnpfc_component_last_flag )
                        inputTensor[ 0 ][ i ][ 2 ][ yPovlp ][ xPovlp ] = strengthControlScaledVal[ i ]
                    else
```

```
        inputTensor[ 0 ][ i ][ yPovlp ][ xPovlp ][ 2 ] = strengthControlScaledVal[ i ]
    if( nnpfc_auxiliary_inp_idc  = = 2 | | nnpfc_auxiliary_inp_idc  = = 3 ) {
        idx = nnpfc_auxiliary_inp_idc
        if( !nnpfc_component_last_flag )
            inputTensor[ idx ][ i ][ idx ][ yPovlp ][ xPovlp ] = convertedTextPrompt
        else
            inputTensor[ idx ][ i ][ yPovlp ][ xPovlp ][ idx ] = convertedTextPrompt
    }
}
else if( nnpfc_inp_order_idc = = 2 )
    for( yP = −nnpfc_overlap; yP < inpPatchHeight + nnpfc_overlap; yP++)
        for( xP = −nnpfc_overlap; xP < inpPatchWidth + nnpfc_overlap; xP++ ) {
        yY = cTop + yP
        xY = cLeft + xP
        yC = yY / SubHeightC
        xC = xY / SubWidthC
        inpYVal = InpY( InpSampleVal( yY, xY, CroppedHeight,
            CroppedWidth, CroppedYPic[ i ], 0 ) )
        inpCbVal = InpC( InpSampleVal( yC, xC, CroppedHeight / SubHeightC,
            CroppedWidth / SubWidthC, CroppedCbPic[ i ], 1 ) )
        inpCrVal = InpC( InpSampleVal( yC, xC, CroppedHeight / SubHeightC,
            CroppedWidth / SubWidthC, CroppedCrPic[ i ], 2 ) )
        yPovlp = yP + nnpfc_overlap
        xPovlp = xP + nnpfc_overlap
        if( !nnpfc_component_last_flag ) {
          inputTensor[ 0 ][ i ][ 0 ][ yPovlp ][ xPovlp ] = inpYVal
          inputTensor[ 0 ][ i ][ 1 ][ yPovlp ][ xPovlp ] = inpCbVal
          inputTensor[ 0 ][ i ][ 2 ][ yPovlp ][ xPovlp ] = inpCrVal
        } else {
          inputTensor[ 0 ][ i ][ yPovlp ][ xPovlp ][ 0 ] = inpYVal
          inputTensor[ 0 ][ i ][ yPovlp ][ xPovlp ][ 1 ] = inpCbVal
          inputTensor[ 0 ][ i ][ yPovlp ][ xPovlp ][ 2 ] = inpCrVal
        }
        if( nnpfc_auxiliary_inp_idc = = 1 )
          if( !nnpfc_component_last_flag )
            inputTensor[ 0 ][ i ][ 3 ][ yPovlp ][ xPovlp ] = strengthControlScaledVal[ i ]
          else
            inputTensor[ 0 ][ i ][ yPovlp ][ xPovlp ][ 3 ] = strengthControlScaledVal[ i ]
        if( nnpfc_auxiliary_inp_idc  = = 2 | | nnpfc_auxiliary_inp_idc  = = 3 ) {
            idx = nnpfc_auxiliary_inp_idc + 1
            if( !nnpfc_component_last_flag )
                inputTensor[ idx ][ i ][ idx ][ yPovlp ][ xPovlp ] = convertedTextPrompt
            else
                inputTensor[ idx ][ i ][ yPovlp ][ xPovlp ][ idx ] = convertedTextPrompt
        }
    }
else if( nnpfc_inp_order_idc = = 3 )
    for( yP = −nnpfc_overlap; yP < inpPatchHeight + nnpfc_overlap; yP++)
        for( xP = −nnpfc_overlap; xP < inpPatchWidth + nnpfc_overlap; xP++ ) {
        yTL = cTop + yP * 2
        xTL = cLeft + xP * 2
        yBR = yTL + 1
        xBR = xTL + 1
        yC = cTop / 2 + yP
        xC = cLeft / 2 + xP
        inpTLVal = InpY( InpSampleVal( yTL, xTL, CroppedHeight,
            CroppedWidth, CroppedYPic[ i ], 0 ) )
        inpTRVal = InpY( InpSampleVal( yTL, xBR, CroppedHeight,
            CroppedWidth, CroppedYPic[ i ], 0 ) )
        inpBLVal = InpY( InpSampleVal( yBR, xTL, CroppedHeight,
            CroppedWidth, CroppedYPic[ i ], 0 ) )
```

```
inpBRVal = InpY( InpSampleVal( yBR, xBR, CroppedHeight,
    CroppedWidth, CroppedYPic[ i ], 0 ) )
inpCbVal = InpC( InpSampleVal( yC, xC, CroppedHeight / 2,
    CroppedWidth / 2, CroppedCbPic[ i ], 1 ) )
inpCrVal = InpC( InpSampleVal( yC, xC, CroppedHeight / 2,
    CroppedWidth / 2, CroppedCrPic[ i ], 2 ) )
yPovlp = yP + nnpfc_overlap
xPovlp = xP + nnpfc_overlap
if( !nnpfc_component_last_flag ) {
  inputTensor[ 0 ][ i ][ 0 ][ yPovlp ][ xPovlp ] = inpTLVal
  inputTensor[ 0 ][ i ][ 1 ][ yPovlp ][ xPovlp ] = inpTRVal
  inputTensor[ 0 ][ i ][ 2 ][ yPovlp ][ xPovlp ] = inpBLVal
  inputTensor[ 0 ][ i ][ 3 ][ yPovlp ][ xPovlp ] = inpBRVal
  inputTensor[ 0 ][ i ][ 4 ][ yPovlp ][ xPovlp ] = inpCbVal
  inputTensor[ 0 ][ i ][ 5 ][ yPovlp ][ xPovlp ] = inpCrVal
} else {
  inputTensor[ 0 ][ i ][ yPovlp ][ xPovlp ][ 0 ] = inpTLVal
  inputTensor[ 0 ][ i ][ yPovlp ][ xPovlp ][ 1 ] = inpTRVal
  inputTensor[ 0 ][ i ][ yPovlp ][ xPovlp ][ 2 ] = inpBLVal
  inputTensor[ 0 ][ i ][ yPovlp ][ xPovlp ][ 3 ] = inpBRVal
  inputTensor[ 0 ][ i ][ yPovlp ][ xPovlp ][ 4 ] = inpCbVal
  inputTensor[ 0 ][ i ][ yPovlp ][ xPovlp ][ 5 ] = inpCrVal
}
if( nnpfc_auxiliary_inp_idc == 1 )
  if( !nnpfc_component_last_flag )
    inputTensor[ 0 ][ i ][ 6 ][ yPovlp ][ xPovlp ] = strengthControlScaledVal[ i ]
  else
    inputTensor[ 0 ][ i ][ yPovlp ][ xPovlp ][ 6 ] = strengthControlScaledVal[ i ]
  if( nnpfc_auxiliary_inp_idc == 2 || nnpfc_auxiliary_inp_idc == 3 ) {
    idx = nnpfc_auxiliary_inp_idc + 4
    if( !nnpfc_component_last_flag )
      inputTensor[ idx ][ i ][ idx ][ yPovlp ][ xPovlp ] = convertedTextPrompt
    else
      inputTensor[ idx ][ i ][ yPovlp ][ xPovlp ][ idx ] = convertedTextPrompt
  }
}
}
```

**Feature(s) associated with the eighth embodiment are provided herein.**

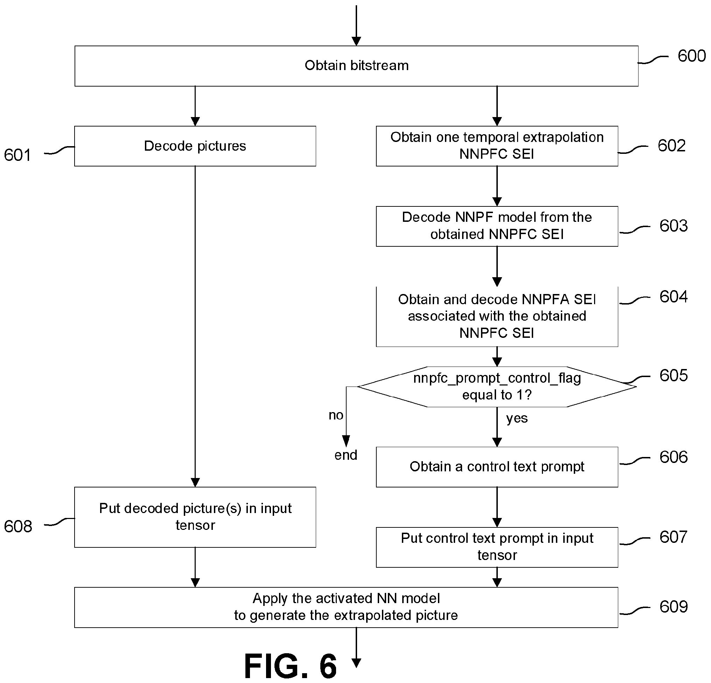

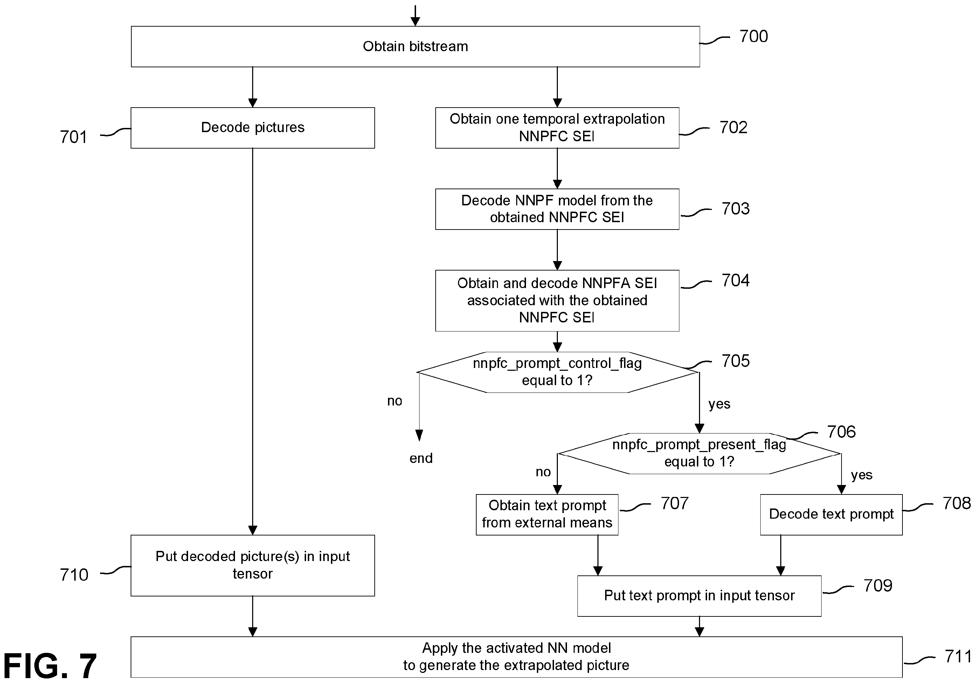

Fig. 6 provides a flow chart of a decoding and post-filtering process according to an embodiment of the present principles. For instance, the decoder of Fig. 6 may implement the feature of signaling of a control flag indicative of a control information used as input of the NNPF and guiding the output filtered picture as disclosed in the first embodiment. The bitstream is obtained in step 600. Step 601 performs the decoding of pictures to generate decoded pictures. Step 602 obtains one NNPFC SEI with purpose for instance corresponding to temporal extrapolation as shown on FIG. 6. One NNPF model is decoded from the NNPFC SEI in step 603. A NNPFA SEI associated to the NNPFC SEI is obtained and decoded in step 604. In step 605, it is checked whether nnpfc_prompt_control_flag for the NNPFC SEI is equal to 1. If nnpfc_prompt_control_flag is equal to 1, the following successive steps apply: a text prompt is obtained in step 606, and the text prompt is provided as input of the input tensor in step 607 to guide the generative NNPF. According to a particular variant, a text prompt may be obtained from external means or from signaling as shown in FIG. 7. If nnpfc_prompt_control_flag is equal to 0, no additional input is provided to the NNPF, and the new method ends. The input tensor is fed by one or more input decoded picture(s) in step 608. The temporal extrapolation is performed using the activated NNPF model, taking as input the input tensor containing the decoded pictures and, when nnpfc_prompt_control_flag is equal to 1, the text prompt (step 609). In case nnpfc_prompt_control_flag for the NNPFC SEI is equal to 0, the temporal extrapolation is performed using the activated NNPF model, using only as input the input tensor containing the decoded pictures (step 609).

In another embodiment, the temporal extrapolation is performed using the activated NNPF model, using as input two input tensors, one containing the decoded pictures and one containing the text prompt.

Fig. 7 provides a flow chart of a decoding and post-filtering process according to an embodiment of the present principles. For instance, the decoder of Fig. 7 may implement the feature of signaling an indication of whether one or more text prompt are signaled or the text prompt comes from external means as disclosed in the first, second or third embodiment. The bitstream is obtained in step 700. Step 701 performs the decoding of pictures to generate decoded pictures. Step 702 obtains one NNPFC SEI with purpose corresponding to temporal extrapolation. One NNPF model is decoded from the NNPFC SEI in step 703. A NNPFA SEI associated to the NNPFC SEI is obtained and decoded in step 704. In step 705, it is checked whether nnpfc_prompt_control_flag for the NNPFC SEI is equal to 1. If nnpfc_prompt_control_flag is equal to 1, the following successive steps apply: it is checked whether nnpfc_prompt_present_flag is equal to 1 in step 706 ; if nnpfc_prompt_present_flag is not equal to 1, a text prompt is obtained from external means in step 707, otherwise a text prompt is decoded in step 708; the text prompt is put as input of the input tensor in step 709. The input tensor is fed by one or more input decoded picture(s) in step 710. The temporal extrapolation is performed using the activated NNPF model (711), using as input the input tensor containing the decoded pictures and, when nnpfc_prompt_control_flag is equal to 1, the text prompt. In case nnpfc_prompt_control_flag for the NNPFC SEI is equal to 0, the temporal extrapolation is performed using the activated NNPF model (711), using only as input the input tensor containing the decoded pictures.

In another embodiment, the temporal extrapolation may be performed using the activated NNPF model, using as input two input tensors, one containing the decoded pictures and one containing the text prompt.

**Feature(s) associated with the nineth embodiment are provided herein.**

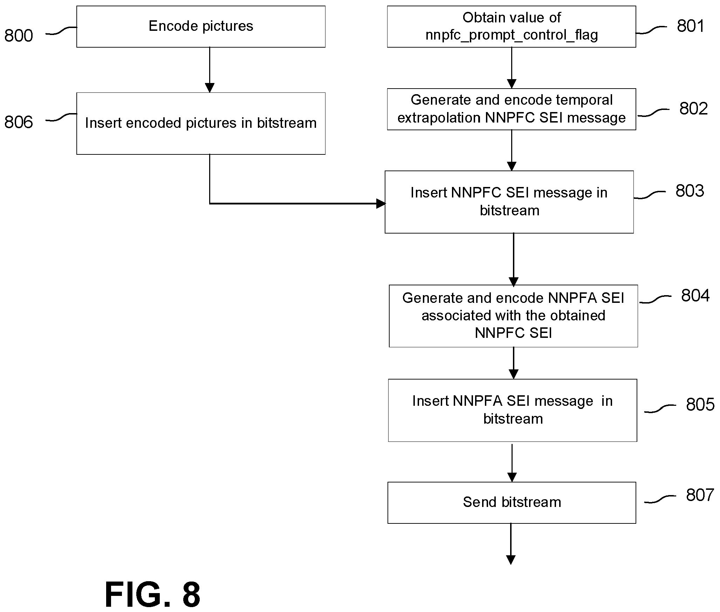

Fig. 8 provides a flow chart of an encoding and signaling process according to an embodiment of the present principles. The pictures to encode are obtained and encoded in step 800. In step 801, in case the temporal extrapolation NNPF allows to have a text prompt as input for guiding the filtering process, the value of nnpfc_prompt_control_flag is set to 1, otherwise it is set to 0. Besides, in step 801, information on a neural-network post-filter NNPF model generating at least one filtered picture by applying the NNPF model to the picture of the video and a text prompt information is obtained. Step 802 generates and encodes the NNPFC SEI with purpose, for instance corresponding to temporal extrapolation and with the nnpfc_prompt_control_flag. The NNPFC SEI is inserted in the bitstream in step 803. A NNPFA SEI associated to the NNPFC SEI is generated and encoded in step 804. It is inserted in the bitstream in step 805. In step 806, encoded pictures are also inserted in the bitstream. In step 807, bistream is sent or stored. Here, a specific order of steps or actions may not be required for the proper operation of the method, and may be modified or combined.

**Feature(s) associated with the generalization to other types of input than text prompt are provided herein.**

In the present principles, it is considered adding a text prompt as input of the NNPF. The principle may be generalized to other types of input data, such as continuous numbers (integer or float), discontinuous numbers indicative of categories/classes, binary flags, vectors of numbers (integer or float), etc.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:

   decoding (601) a picture of a video;
   obtaining (602) a syntax structure NNPFC for neural-network post-filter, the syntax structure NNPFC comprising an indication of a control information guiding a neural-network post-filter NNPF;
   decoding (603) a neural-network post-filter NNPF model from the obtained NNPFC;
   obtaining (604) a syntax structure for neural-network post-filter activation NNPFA associated with the obtained NNPFC;
   obtaining (606) a text prompt information responsive (605) to the indication that control information guides the neural-network post-filter NNPF; and
   generating (609) at least one filtered picture by applying the activated NNPF model to the decoded picture and the text prompt information.

2. An apparatus comprising one or more processors, wherein the one or more processors are configured for:

   decoding (601) a picture of a video;
   obtaining (602) a syntax structure NNPFC for neural-network post-filter, the syntax structure NNPFC comprising an indication on whether a control information guides a neural-network post-filter NNPF or not;
   decoding (603) a neural-network post-filter NNPF model from the obtained NNPFC;
   obtaining (604) a syntax structure for neural-network post-filter activation NNPFA associated with the obtained NNPFC;
   obtaining (606) a text prompt information responsive (605) to the indication that control information guides the neural-network post-filter NNPF; and
   generating (609) at least one filtered picture by applying the activated NNPF model to the decoded picture and the text prompt information.

3. The method of claim 1 or the apparatus of claim 2 wherein the text prompt information is obtained (606) from a user input captured by external means.

4. The method of any of claims 1 or 3 or the apparatus of any of claims 2 or 3 wherein the syntax structure NNPFC further comprises an indication on whether text prompt information is present in the syntax structure NNPFC.

5. The method of claim 4 or the apparatus of claim 4 wherein the text prompt information is obtained by decoding (708) a text prompt information from the obtained NNPFC responsive (706) to the indication that text prompt information is present in the syntax structure NNPFC.

6. The method of any of claims 1 or 3 or the apparatus of any of claims 2 or 3 wherein the syntax structure NNPFC further comprises an indication on a number of text prompt information present in the syntax structure NNPFC.

7. The method of claim 6 or the apparatus of claim 6 wherein one or more text prompt information are obtained by decoding (708) a text prompt information from the obtained NNPFC responsive (706) to the indication that a number of text prompt information not equal to zero is present in the syntax structure NNPFC.

8. The method of any of claims 1, 3-7 or the apparatus of any of claims 2-7 wherein the decoded picture and the text prompt information are concatenated into a tensor used as input of the activated NNPF model.

9. The method of claim 8 or the apparatus of claim 8 wherein the text prompt information comprises a string of characters and wherein the string of characters is mapped to an integer to be concatenated into the tensor used as input of the activated NNPF model.

10. The method of any of claims 1, 3-9 or the apparatus of any of claims 2-9 wherein a purpose of the NNPF is one of Quality Improvement, Colourization Temporal Extrapolation.

11. A method comprising:

encoding (800) a picture of a video;
obtaining (801) an indication on whether a control information guides a neural-network post-filter NNPF or not;
obtaining (801) information of a neural-network post-filter NNPF model generating at least one filtered picture by applying the NNPF model to the picture of the video and a text prompt information;
encoding (802) a syntax structure NNPFC for neural-network post-filter, the syntax structure NNPFC comprising an indication on whether a control information guides a neural-network post-filter NNPF or not;
encoding (804) a syntax structure for neural-network post-filter activation NNPFA associated with the NNPFC; and
generating (806, 803, 805) a bitstream comprising an encoded picture, an encoded NNPFC, and an encoded NNPFA.

12. An apparatus comprising one or more processors, wherein the one or more processors are configured for:

encoding (800) a picture of a video;
obtaining (801) an indication on whether a control information guiding a neural-network post-filter NNPF or not;
obtaining (801) information of a neural-network post-filter NNPF model generating at least one filtered picture by applying the NNPF model to the picture of the video and a text prompt information;
encoding (802) a syntax structure NNPFC for neural-network post-filter, the syntax structure NNPFC comprising an indication on whether a control information guides a neural-network post-filter NNPF or not;
encoding (804) a syntax structure for neural-network post-filter activation NNPFA associated with the NNPFC; and

generating (806, 803, 805) a bitstream comprising an encoded picture, an encoded NNPFC, and an encoded NNPFA.

13. The method of claim 11 or the apparatus of claim 12 wherein the syntax structure NNPFC further comprises an indication on whether text prompt information is present in the syntax structure NNPFC.

14. The method of claim 13 or the apparatus of claim 13 wherein responsive to the indication that text prompt information is present in the syntax structure NNPFC, the syntax structure NNPFC further comprises a text prompt information.

15. A bitstream comprising video data, formed by performing the method of any one of claim 11 and claims 13-14.

**FIG. 1**

EP 4 730 779 A1

FIG. 2

EP 4 730 779 A1

**FIG. 3**

EP 4 730 779 A1

FIG. 4

FIG. 5

Obtain bitstream — 600

Decode pictures — 601

Obtain one temporal extrapolation NNPFC SEI — 602

Decode NNPF model from the obtained NNPFC SEI — 603

Obtain and decode NNPFA SEI associated with the obtained NNPFC SEI — 604

nnpfc_prompt_control_flag equal to 1? — 605

no

end

yes

Obtain a control text prompt — 606

Put decoded picture(s) in input tensor — 608

Put control text prompt in input tensor — 607

Apply the activated NN model to generate the extrapolated picture — 609

# FIG. 6

FIG. 7

Obtain bitstream — 700

Decode pictures — 701

Obtain one temporal extrapolation NNPFC SEI — 702

Decode NNPF model from the obtained NNPFC SEI — 703

Obtain and decode NNPFA SEI associated with the obtained NNPFC SEI — 704

nnpfc_prompt_control_flag equal to 1? — 705

no → end

yes

nnpfc_prompt_present_flag equal to 1? — 706

no → Obtain text prompt from external means — 707

yes → Decode text prompt — 708

Put text prompt in input tensor — 709

Put decoded picture(s) in input tensor — 710

Apply the activated NN model to generate the extrapolated picture — 711

800 ⌐ Encode pictures

806 ⌐ Insert encoded pictures in bitstream

801 — Obtain value of nnpfc_prompt_control_flag

802 — Generate and encode temporal extrapolation NNPFC SEI message

803 — Insert NNPFC SEI message in bitstream

804 — Generate and encode NNPFA SEI associated with the obtained NNPFC SEI

805 — Insert NNPFA SEI message in bitstream

807 — Send bitstream

# FIG. 8

| | Europäisches Patentamt European Patent Office Office européen des brevets | **EUROPEAN SEARCH REPORT** | **Application Number** EP 24 30 6721 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DESHPANDE (SHARP) S: "AHG9: On Neural Network Post Filter for Spatial Extrapolation", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI0061 5 July 2024 (2024-07-05), XP030320169, Retrieved from the Internet: URL:https://jvet-experts.org/doc_end_user/documents/35_Sapporo/wg11/JVET-AI0061-v1.zip JVET-AI0061-v1.docx [retrieved on 2024-07-05] * the whole document * ----- | 1-15 | INV. H04N19/117 H04N19/70 H04N19/85 |
| A | FRANÇOIS (INTERDIGITAL) E ET AL: "AHG9: Questions regarding NNPFC SEI message with temporal extrapolation purpose", 147. MPEG MEETING; 20240715 - 20240719; SAPPORO; (MOTION PICTURE EXPERT GROUP OR ISO/IEC JTC1/SC29/WG11), , no. m69168 13 July 2024 (2024-07-13), XP030322967, Retrieved from the Internet: URL:https://dms.mpeg.expert/doc_end_user/documents/147_Sapporo/wg11/m69168-JVET-AI0296-v2-JVET-AI0296_NNPF_temporalExtrapol_v2.zip JVET-AI0296_NNPF_temporalExtrapol_v2.docx [retrieved on 2024-07-13] * the whole document * ----- -/-- | 10 | **TECHNICAL FIELDS SEARCHED (IPC)** H04N |

The present search report has been drawn up for all claims

| Place of search | Date of completion of the search | Examiner |
|---|---|---|
| Munich | 25 March 2025 | Giuliani, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

## EUROPEAN SEARCH REPORT

**Application Number**

EP 24 30 6721

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Report of the 16th JTC 1/SC 29/WG 5 meeting", 147. MPEG MEETING; 20240715 - 20240719; SAPPORO; (MOTION PICTURE EXPERT GROUP OR ISO/IEC JTC1/SC29/WG11), , no. n24249 16 August 2024 (2024-08-16), XP030320997, Retrieved from the Internet: URL:https://dms.mpeg.expert/doc_end_user/documents/147_Sapporo/wg11/MDS24249_WG05_N00303.zip WG5_N0303-JVET-AI1000-v1-35thMtgRpt.docx [retrieved on 2024-08-16] * page 191 - page 191 * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 25 March 2025 | Giuliani, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)